(19) **Europäisches Patentamt**

**European Patent Office**

**Office européen des brevets**

(11) Veröffentlichungsnummer : **0 575 413 B1**

(12) # EUROPÄISCHE PATENTSCHRIFT

(45) Veröffentlichungstag der Patentschrift :
**24.05.95 Patentblatt 95/21**

(51) Int. Cl.[6] : **G06F 9/45,** G06F 11/34,
G06F 12/08

(21) Anmeldenummer : **92906412.9**

(22) Anmeldetag : **10.03.92**

(86) Internationale Anmeldenummer :
**PCT/DE92/00198**

(87) Internationale Veröffentlichungsnummer :
**WO 92/16894 01.10.92 Gazette 92/25**

(54) **VERFAHREN ZUM MASCHINELLEN ERSTELLEN EINES AUS MEHREREN MODULEN ZU BINDENDEN PROGRAMMES.**

(30) Priorität : **14.03.91 DE 4108309**

(43) Veröffentlichungstag der Anmeldung :
**29.12.93 Patentblatt 93/52**

(45) Bekanntmachung des Hinweises auf die
Patenterteilung :
**24.05.95 Patentblatt 95/21**

(84) Benannte Vertragsstaaten :
**AT BE CH DE ES FR GB IT LI NL SE**

(56) Entgegenhaltungen :
**COMPUTER ARCHITECTURE CONFERENCE PROCEEDINGS Bd. 17, Nr. 3, Juni 1989,WAS-HINGTON, US Seiten 242 - 251; W.W. HWU ET AL.: 'Achieving High Instruction Cache Performance with an Optimizing Compiler'
IEEE TRANSACTIONS ON SOFTWARE ENGINEERING. Bd. SE-9, Nr. 1, Januar 1983, NEW YORK US Seiten 69 - 79; E.J. LAU ET AL.: 'Program Restructuring in a Multilevel Virtual Memory"
COMPUTER ARCHITECTURE NEWS Bd. 17, Nr. 2, April 1989, NEW YORK, US Seiten 183 -191; S MCFARLING: 'Program Optimization for Instruction Caches'**

(56) Entgegenhaltungen :
**MICROPROCESSING AND MICROPROGRAM-MING. Bd. 27, Nr. 1/5, August 1989, AMSTER-DAM NL Seiten 349 - 354; M. ANCONA ET AL.: '32-bit Microprocessor Architectures and Extended Abstract Machines for High Level Languages'
RISC/os (UMIPS) User's Reference Manual, Volume I (SYSTEM V), Bestellnummer 3204DOC; Febr. 1989, MIPS Computer Systems Inc.**

(73) Patentinhaber : **SIEMENS AKTIENGESELLSCHAFT
Wittelsbacherplatz 2
D-80333 München (DE)**

(72) Erfinder : **HAFER, Christian
Ottobrunnerstrasse 49
D-8000 München 83 (DE)**
Erfinder : **LINDMEIER, Horst
Ackerstrasse 27
D-8000 München 90 (DE)**
Erfinder : **PLANKL, Josef
Am Stiergarten 29
D-8011 Höhenkirchen-Siegertsbrunn (DE)**
Erfinder : **SCHMITT, Franz-Josef
Fanny-Niggl-Strasse 2
D-8202 Bad Aibling (DE)**

EP 0 575 413 B1

**Beschreibung**

Die Erfindung betrifft ein Verfahren zum maschinellen Erstellen eines aus mehreren Modulen zu bindenden Programmes. Programme werden von Programmieren als Quellenprogramme abgefaßt. Derartige Quellenprogramme werden von einem Compiler verarbeitet, so daß daraus ein auf einem Rechnersystem ablauffähiges Programm maschinell erstellt wird. Ein derartiges Programm besteht häufig aus mehreren Modulen als Ergebnis von beispielsweise getrennten Compilierungen verschiedener Module. Derartige Module werden in einer Linkphase des Compilers zum ablauffähigen Programm gebunden. Zwischen diesen Modulen können Programmübergänge und Datenzugriffe vorgesehen sein. Beim Ablauf des Programms sollen diese Module gemäß ihrer Link-Anordnung in einem Speicher vorliegen zur Programmbearbeitung mittels Prozessor. Mittels Speicherzugriff adressiert der Prozessor das Programm beispielsweise beim Laden von Instruktionen, beim Lesen von Daten, beim Schreiben von Daten.

Neuere Prozessoren haben eine Adressierfähigkeit, welche weit größer ist als ein kostengünstiger Speicher. Darüber hinaus haben neuere Prozessoren eine Arbeitstaktfrequenz, welche höher ist als die Zugriffszyklusfrequenz eines großen kostengünstigen Speichers. Schnellere Speicher sind weniger kostengünstig. Aus diesem Grunde werden häufig Speicherhierarchien verwendet. Insbesondere wird zumeist ein großer kostengünstiger Halbleiterspeicher als ein Hauptspeicher verwendet mit einer niedrigeren Zykluszugriffsfrequenz in Verbindung mit einem kleinen schnellen Cache, dessen Zugriffszyklusfrequenz auf den Prozessor abgestimmt sein soll.

Beispielsweise kann ein Prozessor betrachtet werden, welcher beim Ablauf der Verarbeitung des Programmes alle 40 nsec einen Befehl als Instruktion aus dem Speicher verarbeiten soll. Als Hauptspeicher kann ein großer Halbleiterspeicher mit 100 nsec Zykluszeit vorgesehen sein. Dazwischen kann ein schnelles Cache mit beispielsweise 10 nsec Zykluszeit vorgesehen sein, welches beispielsweise innerhalb von 25 nsec normalerweise eine Instruktion dem Prozessor liefern kann. Derartige Leistungsparameter sind aufgrund von Adressierungsrechnungen beim Prozessor einerseits und beim Cache andererseits in diesem betrachteten Fall mitunter realistisch. Das Cache wird als eine Abbildung des Hauptspeichers adressiert. Dieses Abbildungsschema kann unterschiedlich vorgegeben sein.

Besonders schnell, einfach realisierbar und kostengünstig ist eine Variante, bei welcher zur Adressierung im Cache die niedrigstwertigen Bits der Hauptspeicheradresse übernommen werden. Dieses wird als direkt abbildendes Cache oder Direct-Map-Cache bezeichnet. Es sind beispielsweise 1024 oder auch 4096 Speicherworte des Hauptspeichers ins Cache ladbar. Diese Speicherworte sollen bevorzugt blockweise ins Cache geladen werden. Als Blockgröße sind 4 bis 16 Worte üblich. Dieser Erfahrungswert ist beispielsweise dadurch begründet, daß nach 4 bis 16 Instruktionen eine Sprunginstruktion folgt zumindest im Durchschnitt bei sehr vielen Programmen.

Zur Beschleunigung kann das Cache eine vorausschauende Ladetechnik erhalten, von welcher auf Verdacht später voraussichtlich benötigte Hauptspeicherinhalte in das Cache vorsorglich geladen werden können, insbesondere bei einer Multiprozessor-Architektur. Ein derartiges Cache kann als ein Snoopy-Cache mit Lookahead-Ability realisiert sein, so daß insbesondere beim Ändern von Daten eine Inkonsistenz zwischen den Inhalten von Cache und Hauptspeicher vermieden wird, indem das Cache den Bustransfer des Hauptspeichers zusätzlich kontrolliert betreffend eines noch ausständigen Write-Back.

Bei einem derartigen schnellen und leistungsfähigen Direct-Map-Cache tritt häufig ein Thrashing auf, welches auch Verdrängung genannt wird und dadurch zustandekommt, daß der Prozessor beispielsweise hintereinander auf Speicherinhalte zugreift, welche im Hauptspeicher jeweils auf verschiedenen Adreßpegeln angeordnet sind, jedoch zufolge des Abbildungsschemas nur in denselben Cacheblock geladen werden können. Selbst bei einer leistungsfähigen Look-ahead-Technik muß der Prozessor Wartezyklen einlegen, bis diese Dateninhalte aus dem Hauptspeicher jeweils in das Cache geholt sind. Deshalb wird oft ein komplexeres Abbildungsschema verwendet.

Dieses Abbildungsschema kann anhand eines Ersetzungsalgorithmus zum Plazieren von in das Cache geladenen Blöcken vorgesehen sein. Der ersetzte Block kann beispielsweise mittels Zufallsgenerator ausgewählt sein. Es kann beispielsweise ein First-In-First-Out (FIFO) Prinzip vorgesehen sein mit Einhaltung einer Reihenfolge beim Laden und Ersetzen. Ebenso kann ein effektives jedoch auch aufwendiges Prinzip eines Least-Frequently-Used (LFU) oder eines Least-Recently-Used (LRU) vorgesehen sein, so daß die Häufigkeit eines Zugriffs zu jedem Block registriert und verglichen wird, oder daß die Zeitspanne seit dem letzten Zugriff zu jedem Block gemessen und verglichen wird.

Bei diesen Varianten kann jeder Datenblock des Hauptspeichers auf jeden Cacheblock abgebildet sein. Seine Adressierung im Cache erfolgt bevorzugt nach einem assoziativen Prinzip. Ein derartiges Cache wird Fully-Assocative-Cache oder vollassoziatives Cache genannt.

Dieses vollassoziative Cache hat die bestmöglichen Voraussetzungen zur Erzielung einer optimalen Hitrate, insbesondere mit Verwendung einer Lookahead-Technik, so daß ein vom Prozessor benötigter Speicherinhalt bereits ins Cache geladen ist und daraus geladen werden kann, was auch als Hit bezeichnet wird, im Gegensatz zu einem Miss, welcher dann vorliegt, wenn im Cache der vom Prozessor benötigte Speicherinhalt nicht vorliegt, und aus dem Hauptspeicher geholt werden muß, während der Prozessor Wartezyklen ausführt. Trotz optimaler Hitrate ist das vollassoziative Cache relativ langsam. Dies ist insbesondere durch die aufwendige assoziative Adressierung ebenso wie durch den aufwendigen Ersetzungsalgorithmus begründet.

Vielfach wird daher ein insbesondere auch kostengünstigerer Kompromiß angewendet in Form eines teilassoziativen Cache. Bei diesem teilassoziativen Cache kann ein bestimmter Speicherinhalt des Hauptspeichers nicht nur auf einen einzigen Cacheblock wie beim Direct-Map-Cache abgebildet werden, sondern gemäß eines Ersetzungsalgorithmusses auf einen von wenigen Cacheblöcken. Üblich sind zwei, vier oder acht Cacheblöcke bei den sog. 2-way-Caches, 4-way-Caches, 8-way-Caches. Demzufolge wird das Direct-Map-Cache auch als 1-way-Cache bezeichnet.

Zwar ist das teilassoziative Cache nicht so schnell wie das Direct-Map-Cache, jedoch bedeutend schneller wie das vollassoziative Cache. Zwar ist die Hitrate beim teilassoziativen Cache nicht so günstig wie beim vollassoziativen Cache, jedoch bedeutend günstiger wie beim Direct-Map-Cache. Zwar ist das teilassoziative Cache nicht so kostengünstig wie das Direct-Map-Cache, jedoch bedeutend kostengünstiger wie das vollassoziative Cache.

Eine detailliertere Darstellung dieser Situation ist beispielsweise in den Kursunterlagen zum "Seminar über RISC-Architekturen", Deutsche Informatik-Akademie, Dez. 1989, Kapitel 3, "Speicher-Architektur", Seite 3-1 bis 3-40 erläutert.

Eine detailliertere Darstellung von Speicherhierarchien ist beispielsweise im Buch "Computer-architecture: a quantitative approach", David A. Patterson, John L. Hennessy, ISBN 1-55880-069-8, 1990, Morgan Kaufmann Publishers Inc., Kapitel 8, "Memory-Hierarchy Design", Seite 403 - 425 erläutert.

Erste Ansätze als einen Beitrag der Software zur Linderung des Problems der Erzielung besserer Hitraten ist enthalten in den MIPS-Compilern. Eine Anwendung der Hilfsmittel CORD und CORD2 ist insbesondere angegeben in "RISC/os (UMIPS) Users Reference Manual", Volume I (System V), Bestellnummer 3204DOC, Febr. 1989, MIPS Computer Systems Inc.. Dabei soll versucht werden durch Anwendung beispielsweise von CORD in der Prozedurebene jeweils nur innerhalb eines Moduls eine gestrafftere Anordnung der Prozeduren zu erreichen. Ebenso kann versucht werden durch Anwendung beispielsweise von CORD2 aus vorliegenden Prozeduren einzelne Basisblöcke herauszulösen und diese in einem neuen Bereich zusammenzustellen.

Der aus dem Dokument Computer Architecture Conference Proceedings, Band 17, Nr. 3, Juni 1989, Washington, US, Seiten 242 - 251 bekannte Algorithmus zur besseren Plazierung von Befehlen im Cache zeigt wie die Software zur Erzielung besserer Hitraten in der ersten Stufe bzw. in den ersten Stufen eines mehrstufigen Speichersystems beitragen kann.

Aus diesem Dokument ist darüber hinaus bekannt, ein Trace-Verfahren zur Simulation des Ablauf eines Programms, dessen Speicherzugriffe in einem Trace-Protokoll aufgelistet werden, durchzuführen.

Die der Erfindung zugrundeliegende Aufgabe besteht darin, daß ein weiteres Verfahren angegeben wird, welches eine Erzielung besserer Hitraten ermöglicht.

Diese Aufgabe ist gelöst bei einem Verfahren mit den im Patentanspruch 1 angegebenen Merkmalen.

Der Erfindung liegt die Erkenntnis zugrunde, daß bisherige Ansätze zu Verbesserungen bei auftretenden Cache-Kollisionen eine große Komplexität aufweisen sowie mit hohen Kosten verbunden sind. Es ist das Ergebnis der Erfindung, daß ein Weg angegeben wird, auf welchem ein bereits großes Maß an Verbesserung erzielt wird mit einer einfachen Methode und geringen Kosten. Die große Komplexität wird entscheidend verringert, indem ausschließlich in der Linkphase des Compilers eingegriffen wird.

Dabei soll eine Link-Anordnung der Module variiert und untersucht werden, so daß zur Durchführung des Link-Verfahrens jene Link-Anordnung ausgewählt werden kann mit einer geringen Anzahl von Cache-Misses. Es steht somit dem Benutzer des Compilers frei, eventuell von sich aus größere oder kleinere Module abzufassen.

Als ein zusätzlicher Vorteil ergibt sich somit, daß beispielsweise für Debugging, Fehlertraces, Simulationen, und ähnliche Anwendungen an der vom Benutzer abgefaßten Form des Quellcodes der Programme keine Veränderungen vorgesehen sind.

Erfindungsgemäß entscheidend ist der Einsatz eines Untersuchungsverfahrens zur Feststellung und bewertenden Markierung aller zu bindenden Module betreffend ihrer Cache-Kollisions-Charakteristika in einer bestimmten Link-Anordnung dieser Module. Somit kann bei Variation der Link-Anordnung anhand dieses Untersuchungsverfahrens eine Bewertung erfolgen.

Dieses Untersuchungsverfahren basiert auf einer simulationsartigen Durchführung eines Ablaufs anhand der Module, sodaß als Ergebnis ein Trace-Protokoll erhalten wird, in welchem Speicherzugriffe aufgelistet werden. Dieses simulierte Trace-Protokoll wird temporär archiviert, sodaß es für das Untersuchungsverfahren wiederholt verfügbar ist.

Anhand dieses simulierten Trace-Protokolls und einer zusätzlich vorzugebenden jeweiligen Link-Anordnung kann vom Untersuchungsverfahren zu jedem getraceten Speicherzugriff entsprechend dessen Häufigkeit beim simulierten Ablauf beispielsweise eine Einzelstatistik erstellt werden bestehend aus einer aufsummierten Anzahl von Cache-Misses. Bei der Erstellung dieses Statistik-Protokolls soll das jeweils beim Ablauf des Programmes vorgesehene Cache zugrundegelegt und simulationsartig nachgebildet werden vom Untersuchungsverfahren.

Zusätzlich kann vom Untersuchungsverfahren beispielsweise eine Modulstatistik erstellt werden, indem für jeden einzelnen Modul in der jeweils vorgegebenen Link-Anordnung je eine aufsummierte Anzahl von Cache-Misses innerhalb je eines sowie zwischen je zweien der Module ermittelt wird.

Zusätzlich kann vom Untersuchungsverfahren beispielsweise eine Gesamtstatistik erstellt werden, indem zu der jeweils vorgegebenen Link-Anordnung eine insgesamt aufsummierte Anzahl von Cache-Misses ermittelt wird.

Aufgrund der vom Untersuchungsverfahren aufbereiteten Einzelstatistik, Modulstatistik, Gesamtstatistik erfolgt beispielsweise die Bewertung der jeweils untersuchten Link-Anordnung. Es ist daraus erkennbar, ob einzelne Programmstellen in einzelnen Modulen vorhanden sind, welche beispielsweise aufgrund ihrer hohen dynamischen Aktivität Anlaß geben zu einer großen Anzahl von Verdrängungen bei ihrer Abbildung auf das Cache.

Derartige Programmstellen mit hoher dynamischer Aktivität werden auch Hot-Spots genannt. Bei sehr vielen Programmen wird ein Anteil von rund 90% der Rechenzeit von nur 10% der Instruktionen benötigt. Falls insbesondere diese Hot-Spots häufige Verdrängungen im Cache verursachen, so ist die Performance nur gering. Gelingt es somit insbesondere für diese Hot-Spots häufige Verdrängungen zu vermeiden, so ist die Performance hoch.

Somit ist erkennbar, daß die Anzahl jener Verdrängungen bei Speicherzugriffen zufolge eines Sprunges oder eines Adreßzugriffes beispielsweise zwischen zwei Modulen beeinflußbar ist, indem diese beiden daran beteiligten Module bezüglich des Adreßpegels relativ zueinander verschoben werden.

Dies kann beispielsweise dadurch erreicht werden, indem innerhalb der Link-Anordnung zwischen diesen beiden betrachteten Modulen eine Lücke eingefügt wird.

Eine derartige Verlängerung betreffend die Link-Anordnung ist jedoch zumeist nicht erwünscht. Diese relative Adreßpegelverschiebung kann insbesondere auch ohne eine Verlängerung der Link-Anordnung dadurch erreicht werden, daß wenigstens einer von diesen beiden betrachteten Modulen mit einem anderen Modul vertauscht wird bezüglich seiner Reihenfolge in der Link-Anordnung. Bei derartigen Verschiebungen ist es nicht immer gewährleistet, daß eine Verbesserung erzielt wird, also eine Verringerung der Anzahl von Cache-Misses.

Bei einer geringen Anzahl sowie lokalen ausgeprägten Hot-Spots ist eine Verschiebung einzelner Module erleichtert kontrollierbar bezüglich ihrer Auswirkungen auf eine Vermeidung bisheriger oder eine Schaffung zusätzlicher Verdrängungen im Cache. Insbesondere bei einer größeren Anzahl von Hot-Spots wird deren Abbildung auf das Cache unter Vermeidung von Cache-Kollisionen schwieriger. Als Ergebnis der Erfindung steht somit ein Untersuchungsverfahren zur Verfügung, durch welches jede beliebige Link-Anordnung untersucht werden kann und verglichen werden kann. Mittels dieses Untersuchungsverfahrens ist aufzeigbar, daß sehr viele Programme nur wenige sowie lokal ausgeprägte Hot-Spots aufweisen. Demzufolge genügt es, bei sehr vielen Programmen vom Optimierungsproblem durch eine Beschränkung die Komplexität entscheidend zu verringern, indem nur die Link-Anordnung der Module des Programmes variiert wird. Während also bei sehr vielen Anwendungsfällen diese entscheidend einfache Methode in vorteilhaft rascher Weise erfolgreich anwendbar ist, kann es bei sehr wenigen Anwendungsfällen auch vorkommen, daß eine ideale Reduzierung der Cache-Misses nicht immer erzielbar ist.

Zur Vermeidung dieser wenigen Ausnahmefälle können insbesondere beim Quellencode des Programmes besonders große Module vermieden werden, so daß auch in diesen wenigen Ausnahmefällen die entscheidend einfache Methode des Variierens der Link-Anordnung der Module vorteilhaft einsetzbar ist. Erfindungsgemäß ist zumindest bei sehr vielen Anwendungsfällen durch diese vorteilhaft einfache Methode des Variierens der Link-Anordnung rasch ein Programm erstellbar, für welches ein kostengünstiges Cache mit einem einfacheren Abbildungsschema vorteilhaft einsetzbar ist, also ein teilassoziatives Cache, insbesondere sogar auch ein Direct-Map-Cache.

Falls beispielsweise schon beim ersten Mal, also mit der anfangs vorliegenden Link-Anordnung vom Untersuchungsverfahren ein Statistikprotokoll erstellt wird mit einer zufriedenstellend kleinen Anzahl von Cache-Misses, sodaß es sich nicht lohnt, eine andere Link-Anordnung zu untersuchen, so wird dies nach der Durchführung des Untersuchungsverfahren erkannt, und für diese Link-Anordnung kann das Link-Verfahren durchgeführt werden. Anderenfalls wird die untersuchte Link-Anordnung mit ihrem zugehörigen Statistik Protokoll temporär archiviert und es wird die Link-Anordnung variiert, so daß eine neue und noch nicht untersuchte Link-Anordnung gebildet wird. Für diese neue Link-Anordnung wird das Untersuchungsverfahren erneut durchgeführt. Danach wird erneut überprüft, ob für diese neue Link-Anordnung eine zufriedenstellend kleine Anzahl von Cache-Misses erreicht ist.

Solange eine vorgesehene Anzahl von Link-Anordnungen noch nicht untersucht ist, werden weitere Link-Anordnungen gebildet und im Untersuchungsverfahren untersucht. Zu jeder untersuchten Link-Anordnung soll ihr zugehöriges Statistik-Protokoll temporär archiviert werden. Sobald die vorgesehene Anzahl von Link-Anordnungen untersucht ist, wird unter den untersuchten und temporär archivierten Link-Anordnungen jene ausgewählt mit der geringsten Anzahl von Cache-Misses zur Durchführung des Link-Verfahrens.

Es ist demzufolge ein Weg aufgezeigt, wie ein Untersuchungsverfahren durchgeführt werden soll mit Erstellung eines Statistikprotrokolls anhand dessen eine untersuchte Link-Anordnung bewertet werden soll. Diese Untersuchung und Bewertung ist dabei in einer vorteilhaften Weise völlig unabhängig vom Variieren der Link-Anordnung.

Vorteilhaft verwendbar ist dieser aufgezeigte Weg beispielsweise zur Erprobung unterschiedlicher Methoden zum Variieren der Link-Anordnung. Insbesondere kann eine beliebige Methode benutzt werden zum Variieren der Link-Anordnung.

Als ein vorteilhaftes Ergebnis des erläuterten Weges zur Auffindung einer Link-Anordnung mittels welcher die Hitrate für das Cache beim Ablauf verbessert werden kann, ist es ermöglicht, ein Cache mit einfachem Abbildungsschema zu benutzen, beispielsweise ein Direct-Map Cache. Ebenso wird es ermöglicht, ein kleineres Cache einzusetzen. Aufgrund dieser Vorkehrungen innerhalb der Software können demzufolge Hardware-Architekturen entscheidend vereinfacht werden, so daß sich daraus insbesondere vorteilhaft kostengünstige Lösungen ergeben.

Eine bevorzugte Ausführungsform der Erfindung ist dadurch gekennzeichnet, daß eine Monte-Carlo-Methode benutzt wird zum Variieren der Link-Anordnung.

Beispielsweise mittels eines Zufallsgenerators wird bestimmt, welche Link-Anordnung von allen prinzipiell möglichen als nächstes untersucht wird. In einer vorteilhaften Weise können damit beliebige Programme untersucht werden mit einer guten Wahrscheinlichkeit eine zufriedenstellende Link-Anordnung aufzufinden. Weitere Vorteile ergeben sich daraus, daß jedes beliebige Cache eingesetzt werden kann, insofern dieses im Untersuchungsverfahren berücksichtigt ist.

Die Vorteile bei der Monte-Carlo-Methode ergeben sich insbesondere daraus, daß zwischen den einzelnen untersuchten Link-Anordnungen keinerlei Korrelation besteht oder erforderlich ist. Wie insbesondere bei Iterationsverfahren als ein entscheidendes Kriterium erforderlich, sind Stabilität oder Konvergenz in diesem Monte-Carlo-Verfahren von seinem Prinzip her ohne jede Bedeutung. Es kann also jede, insbesondere auch jede noch so ungewöhnliche, funktionelle Abhängigkeit zwischen Link-Anordnung und Statistikprotokoll vorliegen, ohne daß dies die Durchführbarkeit oder den Erfolg des Variierungsverfahrens beeinträchtigt.

Eine weitere bevorzugte Ausführungsform der Erfindung ist dadurch gekennzeichnet, daß eine Plottungstabelle erstellt wird beim Untersuchen der Link-Anordnung.

Zu einer untersuchten Link-Anordnung soll im Untersuchungsverfahren beispielsweise zu jedem Speicherzugriff je ein Plott erstellt werden. Dabei sollen Adreßpegel-gerecht, die Speicherzugriffe aus dem Traceprotokoll umgesetzt werden und auf das Cache abgebildet werden. Zu jedem Modul soll je ein Cache-Plott erstellt werden, in dem zu jedem Cache-Block aufsummiert geplottet wird die darauf abgebildete Zugriffsanzahl. Dieser Cache-Plott, welcher auch Modulplott genannt wird, ändert sich zyklisch beim stetigen Verschieben beispielsweise des letzten Moduls nach hinten, insbesondere betreffend dessen nachfolgend erläuterte Korrelationen. Entsprechend der zu untersuchenden Link-Anordnung soll beispielsweise zu jedem Modul jeweils ein Adreßpegel-gerechter Modul-Plott erstellt werden. Anhand dieser soll untersucht werden, inwiefern diese Modul-Plotts korrelieren, also für einen bestimmten Cache-Block in mehr als einem Modul-Plott eine größere Zugriffsanzahl aufscheint. Bei sehr stark ausgeprägten Hot-Spots ist bei einer günstigen Link-Anordnung diese Korrelation gering, und damit auch die Anzahl der Verdrängungen. Auf diese Weise werden alle Module paarweise untersucht. Beim Variieren werden bevorzugt jene Module verschoben, insbesondere durch Vertauschen, für welche eine große Korrelation ermittelt wird.

Insbesondere bei Verwendung eines Direct-Map-Cache ist diese Plottungsmethode vorteilhaft einsetzbar bei ausgeprägten Hot-Spots. Dies ist als ein Ergebnis erzielt bei einer Überprüfung vieler Programme anhand der zuvor erläuterten Monte-Carlo-Methode. Dabei zeigt sich, daß es für sehr viele Programme eine ausreichend günstige Link-Anordnung gibt, welche beispielsweise mittels der Monte-Carlo-Methode auffindbar ist. Eine Analyse der zugrundeliegenden Systematik zeigt, daß sehr viele Programme ausgeprägte Hot-Spots aufweisen. Zufolge dieser Erkenntnis ist die Plottungsmethode weitgehend vorteilhaft einsetzbar, und liefert sehr rasch eine ausreichend günstige Link-Anordnung.

Eine weitere bevorzugte Ausführungsform der Erfindung ist dadurch gekennzeichnet, daß in der Plottungstabelle aufsummiert eingetragen wird, wieviele Cache-Misses insgesamt bei Speicherzugriffen innerhalb je eines sowie zwischen je zweien der Module vorliegen, so daß anhand dieser Plottungseinträge der Plottungstabelle jene Module bestimmt werden, welche zum Variieren der Link-Anordnung verschoben werden.

Beim Trace-Verfahren sollen Hauptspeicheradressen aufgelistet werden zumindest von den Speicherzugriffen beim Ausführen von Sprunginstruktionen und beim Lesen sowie Ändern von Dateninhalten.

Beispielsweise bei einem Cache mit Lookahead-Ability kann es vorgesehen sein, daß jeder Speicherzugriff im Traceprotokoll aufzulisten ist, so daß eine Simulation der jeweiligen Inhalte der Cacheblöcke des Cache erfolgen kann. Gleiches gilt für ein vollassoziatives Cache und für ein teilassoziatives Cache.

Beispielsweise bei einem Direct-Map-Cache kann es ausreichend sein, daß nur jene Speicherzugriffe beim Ausführen von Sprunginstruktionen und beim Lesen oder Ändern von Dateninhalten im Trace-Protokoll aufgelistet werden, so daß nur jene Speicherzugriffe untersucht werden, bei welchen ein Cache-Miss behoben werden soll.

In jedem Fall soll der Umfang des Traceprotokolls auf das jeweils zugrundegelegte Cache so abgestimmt sein, daß eine Simulation der Inhalte der Cache-Blöcke erfolgen kann zur Ermittlung von Cache-Misses.

Aufgrund der Link-Anordnung sind zum Adaptieren des Trace-Protokolls und zum Ermitteln der Cache-Misses für jeden im TraceProtokoll aufgelisteten Speicherzugriffe dessen Hauptspeicheradressen zu aktualisieren. Dies kann so erfolgen, daß ein aktualisiertes Trace-Protokoll stets aufbereitet wird. Es kann auch so erfolgen, daß für gleiche Speicherzugriffe im Trace-Protokoll je eine Markierung eingetragen ist, welche als ein Symbol oder ein Verweis realisiert sein kann. Zu jeder dieser Markierungen von gleichen Speicherzugriffen kann eine einzige Eintragung genügen, um anzugeben, von welcher Hauptspeicheradresse zu welcher Hauptspeicheradresse der Speicherzugriff erfolgt. Somit können derartige Eintragungen tabellarisch zusammengefaßt werden. In diesem Fall genügt es, die Hauptspeicheradressen der Eintragungen einer derartigen Zugriffstabelle zu aktualisieren. Zusätzlich soll beim Eintrag vermerkt sein, von welchem Modul zu welchem Modul der Speicherzugriff erfolgt, so daß sich daraus eine modulbezogene Plottungstabelle ermitteln läßt, in welcher aufsummiert angegeben ist, wie viele Cache-Misses insgesamt bei Speicherzugriffen innerhalb je eines und zwischen je zweien der Module vorliegen.

Beispielsweise bei einem zugrundegelegten Direct-Map-Cache kann in einer vorteilhaften Weise aus dem Eintrag in der Zugriffstabelle schon erkannt werden, ob ein Cache-Miss bei allen Speicherzugriffen vorliegt, welche diesem Eintrag zugeordnet sind. Falls demzufolge im Eintrag auch vermerkt ist, wie viele gleiche Speicherzugriffe diesem Eintrag zugeordnet sind, genügt es beispielsweise bei einem Direct-Map-Cache diese Anzahl zu betrachten. Es ist anhand der Hauptspeicheradressen des Speicherzugriffs erkennbar, ob eine Verdrängung im gleichen Cache-Block des Direct-Map-Cache vorliegt, und somit ein Cache-Miss vorliegt. In diesem Fall können die Cache-Misses anhand der Einträge mit einer derartigen Zugriffstabelle ermittelt werden. Zum Adaptieren des Trace-Protokolls ist es in diesem Fall lediglich erforderlich, die Einträge der Zugriffstabelle zu aktualisieren, und daraus die Cache-Misses zu ermitteln.

Eine weitere bevorzugte Ausführungsform der Erfindung ist dadurch gekennzeichnet, daß beim Variieren der Link-Anordnung jeder Plottungseintrag von Cache-Misses berücksichtigt wird, indem eine Reihenfolge der Module der Link-Anordnung so variiert wird, daß im Falle von einem betroffenen Modul dieser bevorzugt nach hinten gereiht verschoben wird, sowie daß im Falle von zwei betroffenen Modulen bevorzugt der in der Reihenfolge hintere nach vorne gereiht verschoben wird, sowie daß eine Richtung der bevorzugten Reihung markiert wird, sowie daß markiert wird, ob ein Modul bereits verschoben ist.

In einer vorteilhaften Weise kann so rasch eine Link-Anordnung bezüglich der Cache-Misses verbessert werden.

Bei einem Plottungseintrag von Cache-Misses für Speicherzugriffe, welche nur innerhalb eines der Module erfolgen, wenn also nur ein Modul betroffen ist, so soll dieser bevorzugt nach hinten gereiht verschoben werden. Falls für diesen betroffenen Modul noch keine Richtung der bevorzugten Reihung markiert ist, wird markiert, daß er nach hinten gereiht zu verschieben ist. Dies kann beispielsweise so erfolgen, daß dieser betroffene Modul mit dem nachfolgend gereihten Modul vertauscht wird.

Verdrängungen bei Speicherzugriffen innerhalb eines Moduls sind eher selten, und können nur bei jenen Modulen vorliegen, deren Länge größer ist als das Cache. Bei größeren Cache-Blöcken können derartige Verdrängungen verbessert unterdrückt werden.Sollten bei einem derartigen Speicherzugriff die Hauptspeicheradressen genau um die Länge des Cache oder einem Vielfachen hiervon auseinanderliegen, so kann beispielsweise bei einem Direct-Map-Cache eine derartige Verdrängung durch ein Verschieben des betroffenen Moduls nicht beeinflußt werden. Je größer die Abweichung von der genauen Länge des Cache ist, desto besser kann die Verdrängung vermieden werden, in dem beim Verschieben des betroffenen Moduls dessen Aufteilung auf die Cache-Blöcke sich so verändern kann, daß die eine der Hauptspeicheradressen des Speicherzugriffs gerade noch auf den einen Cache-Block abgebildet wird, während die andere Hauptspeicheradresse des Speicherzugriffs bereits auf den benachbarten Cache-Block abgebildet wird, so daß dadurch eine Verdrängung vermieden wird. Eine derartige Änderung kann durch ein Vertauschen von beispielsweise benachbarten Modulen erreicht werden, falls der getauschte Modul eine Länge aufweist, welche kein genaues Vielfaches von einem Cache-Block ist, was insbesondere bei größeren Cache-Blöcken auch seltener der Fall ist.

Es kann vorgesehen sein, daß beispielsweise, falls der betroffene Modul an die letzte Stelle gereiht worden ist, vor diesem Modul eine Lücke eingefügt wird, deren Länge variiert wird schrittweise bis eine Länge der Lücke beispielsweise gleich einem Cache-Block erreicht ist.

Es kann vorgesehen sein, daß für einen an letzter Stelle gereihten Modul die andere Richtung, also nach vorne, als bevorzugte Reihung markiert wird. Ebenso kann vorgesehen sein, daß für einen an erster Stelle gereihten Modul die andere Richtung, also nach hinten, als bevorzugte Richtung markiert wird. Falls demzufolge eine Richtung der bevorzugten Reihung für den betroffenen Modul bereits markiert ist, so soll diese beim Verschieben beachtet werden. Ebenso soll ein Modul, für welchen beim Variieren einer bestimmten Link-Anordnung bereits markiert worden ist, daß er schon verschoben worden ist, nach Möglichkeit nachfolgend nicht noch weiter verschoben werden.

Bei einem Plottungseintrag von Cache-Misses für Speicherzugriffe, welche zwischen zweien der Module erfolgen, wenn also zwei Module betroffen sind, so soll der in der Reihenfolge der Module von der zu variierenden Link-Anordnung an hinterer Stelle enthaltene Modul bevorzugt nach vorne gereiht verschoben werden. Bei Verdrängungen zufolge eines Speicherzugriffs zwischen zwei betroffenen Modulen genügt es, nur einen von den beiden zu verschieben, so daß die eine Hauptspeicheradresse des Speicherzugriffs auf den selben Cache-Block abgebildet verbleibt, während die zweite Hauptspeicheradresse des Speicherzugriffs zufolge des Verschiebens auf einen anderen Cache-Block abgebildet wird. Insbesondere erfolgt in einer vorteilhaften Weise dadurch, daß nur einer von beiden betroffenen Modulen verschoben wird, eine geringere Änderung der Link-Anordnung, als wenn beispielsweise beide betroffenen Module verschoben werden. Dies ist insbesondere für die Iteration beim Variieren der Link-Anordnung vorteilhaft. Falls beispielsweise die beiden von der Verdrängung betroffenen Module nebeneinander liegen, werden somit nur diese beiden verschoben, und alle übrigen Module erfahren keine Änderung ihrer Reihenfolge.

Es soll stets geprüft werden, ob für zumindest einen von den beiden von der Verdrängung betroffenen Module eine Richtung bereits markiert ist zur bevorzugten Reihung. Falls beispielsweise der vordere von den beiden betroffenen Modulen bereits markiert ist, bevorzugt nach vorne gereiht zu werden, so soll dies ausgeführt werden. Anderenfalls soll bevorzugt der hintere von beiden betroffenen Modulen nach hinten gereiht werden, falls dieser bereits markiert ist bevorzugt nach hinten gereiht zu werden. Falls für keinen von den beiden betroffenen Modulen eine bevorzugte Richtung markiert ist, so soll der hintere von den beiden betroffenen Modulen markiert werden als nach vorne zu verschieben, und dies soll ausgeführt werden.

Einzelne Varianten, wann ein Modul markiert wird, und ob als nach vorne oder nach hinten zu verschieben, ob und wann derartige Markierungen eventuell wieder zu löschen sind, sollen stets so erstellt sein, daß durch diese Markierungen gewährleistet ist,daß möglichst viele unterschiedliche Link-Anordnungen beim Variieren erzeugbar sind, und eine Rekursion beim Variieren weitgehend vermieden wird.

Eine weitere bevorzugte Ausführungsform der Erfindungsform ist dadurch gekennzeichnet, daß beim Variieren der Link-Anordnung eine Lücke eingefügt wird.

Eine derartige Lücke kann beispielsweise als ein zusätzlicher Modul erzeugt sein, und beispielsweise an vorderster Stelle in die Reihenfolge der Module der Link-Anordnung eingefügt werden, und in der Folge beim Variieren, wie ein normaler Modul behandelt, verschoben, und letztlich auch gebunden werden. Es kann auch vorkommen, daß mehrere derartige Lücken eingefügt werden, beispielsweise je eine nach einer bestimmten Anzahl von Variierungsschritten. Die Lückengröße kann auf das Cache abgestimmt sein, und beispielsweise Cacheblockgröße oder ein Vielfaches betragen, oder beispielsweise eine bestimmte Größe, beispielsweise auch klein sein. Die Größe einer derartigen Lücke kann auch abgestimmt sein, und innerhalb eines Variierungsschrittes als günstig ermittelt sein.

Die Erfindung wird anhand der Figuren näher erläutert, in welchen Ausführungsbeispiele angegeben sind.

Die Fig. 1 zeigt ein Ablaufübersichtsflußdiagramm eines Verfahrens zum maschinellen Erstellen eines aus mehreren Modulen zu bindenden Programmes.

Die Fig. 2 zeigt ein Ablaufübersichtsflußdiagramm eines Untersuchungsverfahrens des Verfahrens zum Ermitteln der Reihenfolge eines aus mehreren Modulen zu bindenden Programmes.

Die Fig. 3 zeigt ein Ablaufübersichtsflußdiagramm eines Variierungsverfahrens des Untersuchungsverfahrens.

Die Fig. 4 zeigt ein Ablaufübersichtsflußdiagramm eines Verfahrens zum Variieren der Link-Anordnung beim Variierungsverfahren.

Die Fig. 5 zeigt ein Ablaufübersichtsflußdiagramm eines Verfahrens zum Verschieben eines Moduls beim Verfahren zum Variieren der Link-Anordnung.

Die Fig. 6 zeigt ein Ablaufübersichtsflußdiagramm eines Verfahrens zum Prüfen von vertauschten Modulen auf eine erste und eine letzte Stelle beim Verfahren zum Verschieben eines Moduls.

Die Fig. 7 zeigt Speicherzugriffe von Modulen sowie deren Notierung in einem Trace-Protokoll.

Die Fig. 8 zeigt eine Abbildung eines Hauptspeichers auf ein Cache.

Die Fig. 9 zeigt eine erste Link-Anordnung der Module im Hauptspeicher.

Die Fig. 10 zeigt eine zweite Link-Anordnung der Module im Hauptspeicher.

Die Fig. 11 zeigt eine dritte Link-Anordnung der Module im Hauptspeicher.

In Zusammenhang mit den Figuren werden folgende Bezugszeichen verwendet:

| V1000, ...V4000 | Verfahrensschritte |
| M1, ...M4 | Module |
| S1, .....S6 | Programmstellen |
| Z12, ...Z64 | Speicherzugriffe |
| TRACE | Trace-Protokoll |
| HS | Hauptspeicher |
| DMC | Direct-Map-Cache |
| CB | Cache-Block |
| ADR | Hauptspeicheradresse |
| MISS | Cache-Miss, Anzahl von Cache-Misses |

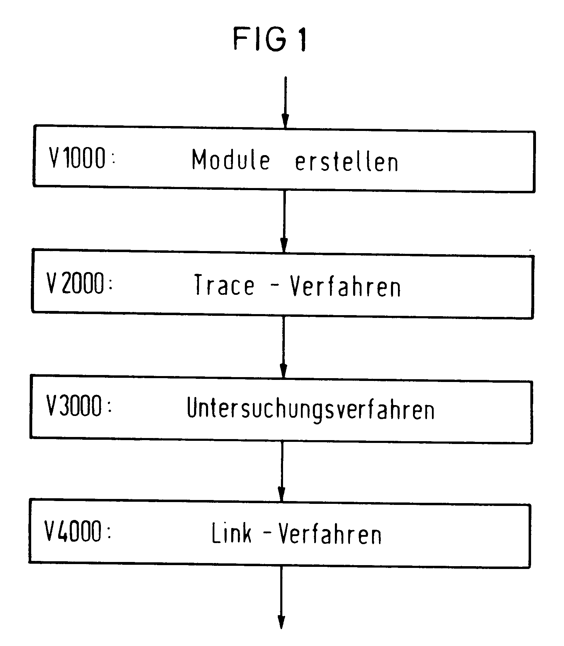

Die Fig. 1 zeigt ein Beispiel für das Verfahren zum maschinellen Erstellen eines aus mehreren Modulen zu bindenden Programmes.

Es wird ein Verfahrensschritt V1000 ausgeführt, bei welchem die Module erstellt werden.

Anschließend wird ein Verfahrensschritt V2000 ausgeführt, bei welchem ein Trace-Verfahren durchgeführt wird. Es wird ein Ablauf des zu bindenden Programmes simuliert. Es wird ein Trace-Protokoll erstellt, in welchem Speicherzugriffe aufgelistet werden.

Anschließend wird ein Verfahrensschritt V3000 ausgeführt, bei welchem ein Untersuchungsverfahren durchgeführt wird. Es werden Link-Anordnungen untersucht. Das Trace-Protokoll wird gemäß der jeweils untersuchten Link-Anordnung adaptiert. Anhand des adaptierten Trace-Protokolls werden zu jeder untersuchten Link-Anordnung Cache-Misses prognostiziert.

Anschließend wird ein Verfahrensschritt V4000 ausgeführt, bei welchem ein Link-Verfahren durchgeführt wird. Es werden die Module zum Erstellen des Programmes in jener untersuchten Link-Anordnung gebunden, für welche eine geringste Anzahl von Cache-Misses prognostiziert ist.

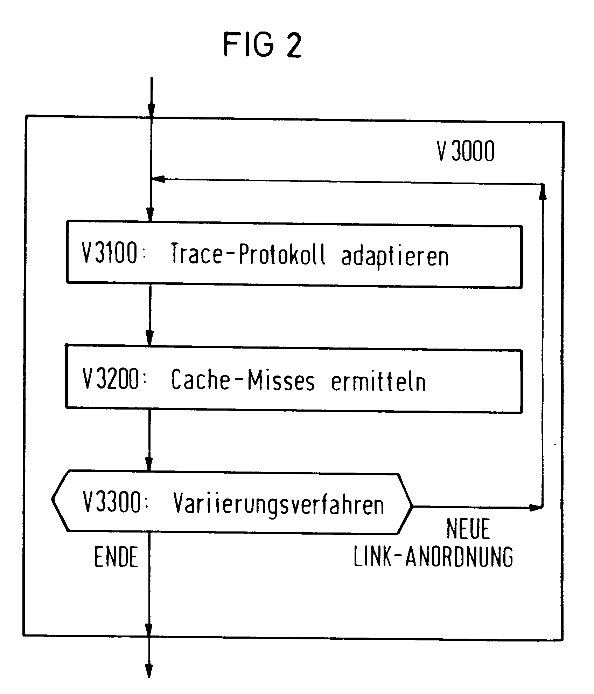

Die Fig. 2 zeigt ein Beispiel für den Verfahrensschritt V3000 des Untersuchungsverfahrens. Es werden die Verfahrensschritte V3100, V3200 und V3300 iterativ ausgeführt.

Es wird der Verfahrensschritt V3100 ausgeführt, bei welchem das Trace-Protokoll adaptiert wird gemäß der jeweils aktuell vorliegenden Link-Anordnung der Module, also anfangs beispielsweise gemäß der anfangs vorliegenden Link-Anordnung.

Anschließend wird der Verfahrensschritt V3200 ausgeführt, bei welchem Cache-Misses prognostiziert werden anhand des adaptierten Trace-Protokolls.

Anschließend wird der Verfahrensschritt V3300 ausgeführt, bei welchem ein Variierungsverfahren durchgeführt wird. Falls die Anzahl der Cache-Misses zu groß ist, wird die untersuchte Link-Anordnung der Module variiert, indem eine Reihenfolge der Module verändert wird, indem beispielsweise Lücken eingefügt werden, oder indem beispielsweise Module vertauscht werden. Für diese neue Link-Anordnung folgt erneut der Verfahrensschritt 3100. Anderenfalls, also falls eine ausreichend niedrige Anzahl von Cache-Misses erzielt ist, oder ebenso, falls eine bestimmte Anzahl von Link-Anordnungen bereits untersucht ist, wird jene untersuchte Link-Anordnung ausgewählt, welche bezüglich einer möglichst niedrigen Anzahl von Cache-Misses optimal ist. Das Variierungsverfahren des Verfahrungsschrittes 3300 und ebenso das Untersuchungsverfahren des Verfahrensschrittes V3000 ist beendet.

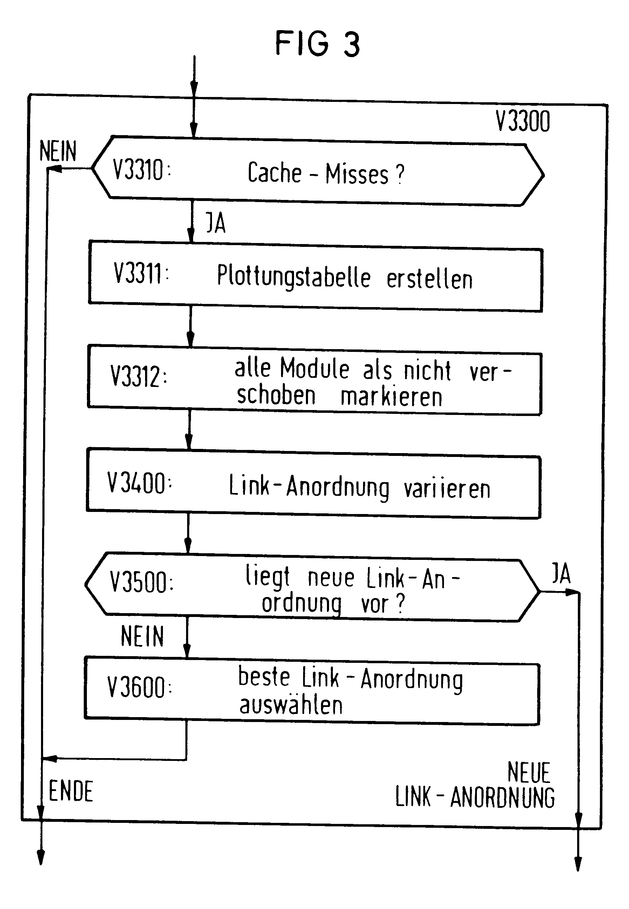

Die Fig. 3 zeigt ein Beispiel für den Verfahrensschritt V3300 des Variierungsverfahrens.

Es wird der Verfahrungsschritt V3310 ausgeführt, bei welchem geprüft wird, ob eine ausreichend niedrige Anzahl von Cache-Misses bei der zuletzt untersuchten Link-Anordnung vorliegt. Falls dies der Fall ist, wird der Verfahrensschritt V3300 des Variierungsverfahrens beendet, indem eine optimale Link-Anordnung festgehalten ist.

Anderenfalls, also falls noch keine ausreichend niedrige Anzahl von Cache-Misses erzielt ist, folgt der Verfahrensschritt V3311. Es wird eine Plottungstabelle erstellt, in welcher aufsummiert angegeben wird, wieviele Cache-Misses insgesamt bei Speicherzugriffen innerhalb je eines sowie zwischen je zweien der Module vorliegen.

Anschließend folgt der Verfahrensschritt V3312. Es werden für den nachfolgenden Verfahrensschritt V3400 alle Module der zuletzt untersuchten und zu variierenden Link-Anordnung zunächst markiert als nicht verschoben.

Anschließend folgt der Verfahrensschritt V3400. Es wird die zuletzt untersuchte Link-Anordnung variiert.

Anschließend folgt der Verfahrensschritt V3500. Es wird geprüft, ob eine neue Link-Anordnung vorliegt, also eine noch nicht untersuchte Link-Anordnung. Falls dies der Fall ist, wird diese festgehalten und zur Durchführung eines weiteren Untersuchungsverfahrens wird der Verfahrensschritt V3300 beendet.

Anderenfalls, also falls beim Variieren eine bereits untersuchte Link-Anordnung ermittelt ist, folgt der Verfahrensschritt V3600. Es wird aus allen bereits untersuchten Link-Anordnungen jene ausgewählt, welche bezüglich einer möglichst niedrigen Anzahl von Cache-Misses optimal ist. Diese wird festgehalten, und zur Durchführung des Link-Verfahrens wird der Verfahrensschritt V3300 beendet.

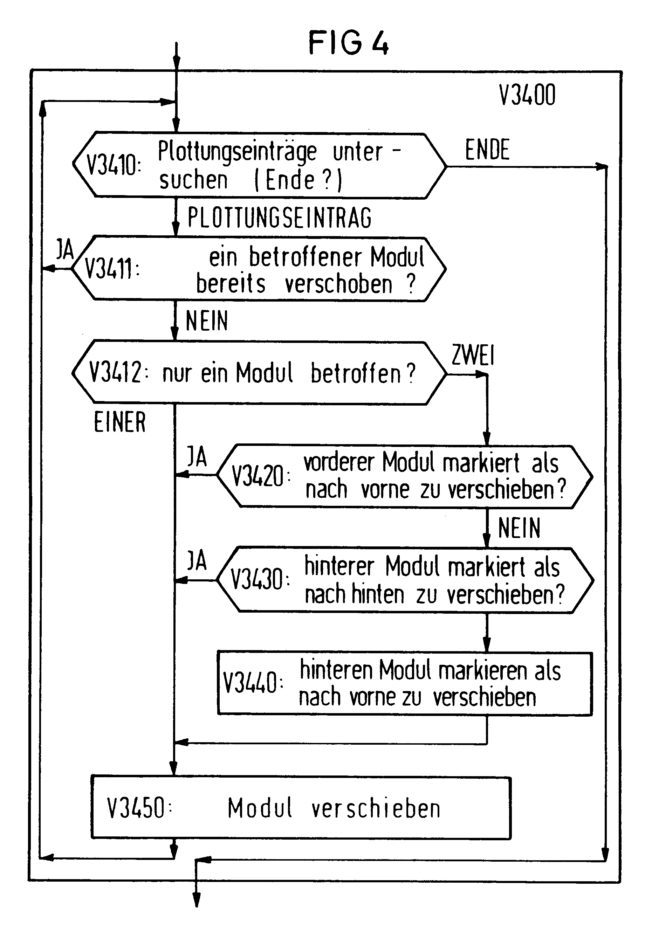

Die Fig. 4 zeigt ein Beispiel für den Verfahrensschritt V3400, bei welchem die zuletzt untersuchte Link-Anordnung variiert wird.

Es wird der Verfahrensschritt V3410 ausgeführt, bei welchem iterativ alle Plottungseinträge untersucht werden, bei welchen Cache-Misses eingetragen sind. Sowie alle Plottungseinträge iterativ bearbeitet sind, wird der Verfahrensschritt V3400 beendet.

Für jeden Plottungseintrag, bei welchem Cache-Misses eingetragen sind, folgt iterativ der Verfahrensschritt V3411. Es wird geprüft, ob für diesen Plottungseintrag einer oder zwei Module betroffen sind, sowie ob zumindest einer dieser betroffenen Module bereits als verschoben markiert ist. Falls dies der Fall ist, wird die Bearbeitung dieses Plottungseintrages beendet, und es folgt der Verfahrensschritt V3410.

Anderenfalls, also falls der eine betroffene Modul oder falls beide betroffenen Module von diesem Plottungseintrag als noch nicht verschoben markiert sind, so folgt der Verfahrensschritt V3412. Es wird verzweigt, abhängig davon, ob ein oder zwei betroffene Module für den Plottungseintrag vorliegen.

Falls für den Plottungseintrag nur ein Modul betroffen ist, so folgt der Verfahrensschritt V3450, bei welchem dieser betroffene Modul verschoben werden soll.

Anderenfalls, also falls für den Plottungseintrag zwei Module betroffen sind, so folgt der Verfahrensschritt V3420. Es wird geprüft, ob der in der Reihenfolge der Link-Anordnung vordere von den beiden betroffenen Modulen markiert ist also nach vorne zu verschieben. Falls dies der Fall ist, so folgt der Verfahrensschritt V3450, bei welchem der vordere betroffene Module verschoben werden soll.

Anderenfalls, also falls der vordere betroffene Modul nicht markiert ist als nach vorne zu verschieben, so folgt der Verfahrensschritt V3430. Es wird geprüft, ob oer in der Reihenfolge der Link-Anordnung hintere von den beiden betroffenen Modulen markiert ist als nach hinten zuverschieben. Falls dies der Fall ist, so folgt der Verfahrensschritt V3450, bei welchem der hintere betroffene Modul verschoben werden soll.

Anderenfalls, also falls der hintere betroffene Modul nicht markiert ist als nach hinten zu verschieben, so folgt der Verfahrensschritt V3440. Es wird der hintere betroffene Modul markiert als nach vorne zu verschieben. Es soll der hintere betroffene Modul verschoben werden.

Es folgt der Verfahrensschritt V3450, bei welchem ein betroffener Modul verschoben werden soll, welcher bestimmt ist aufgrund der Verfahrensschritte V3412, V3420, V3430 oder V3440. Dies ist gemäß Verfahrensschritt V3412 den eine betroffene Modul, oder gemäß Verfahrensschritt V3420 der vordere betroffene Modul, oder gemäß der Verfahrensschritte V3430 oder V3440 der hintere betroffene Modul.

Es folgt der Verfahrensschritt V3410 als eine Iterationsschleife. Falls beim Verfahrensschritt V3410 kein weiterer Plottungseintrag mit Cache-Misses mehr vorgefunden wird, so ist die Iterationsschleife beendet. Es wird der Verfahrensschritt V3400 beendet.

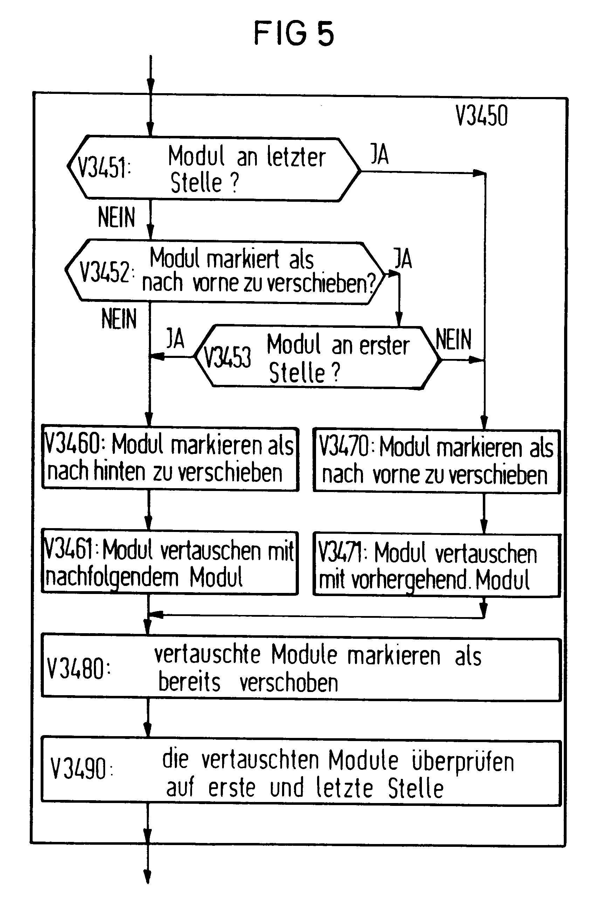

Die Fig. 5 zeigt ein Beispiel für den Verfahrensschritt V3450, bei welchem der betroffene Modul verschoben werden soll.

Es wird der Verfahrensschritt V3451 ausgeführt. Es wird geprüft, ob der zu verschiebende Modul in der Reihenfolge der Link-Anordnung an letzter Stelle ist. Falls dies der Fall ist, folgt der Verfahrensschritt V3470, und der zu verschiebende Modul wird nach vorne verschoben.

Anderenfalls folgt der Verfahrensschritt V3452. Es wird geprüft, ob der zu verschiebende Modul markiert ist als nach vorne zu verschieben. Falls dies nicht der Fall ist, folgt der Verfahrensschritt V3460, und der zu verschiebende Modul wird nach hinten verschoben.

Anderenfalls folgt der Verfahrensschritt V3453. Es wird geprüft, ob der zu verschiebende Modul in der Reihenfolge der Link-Anordnung an erster Stelle ist. Falls dies der Fall ist, folgt der Verfahrensschritt V3460, und der zu verschiebende Mcdul wird nach hinten verschoben. Anderenfalls folgt der Verfahrensschritt V3470, und der zu verschiebende Modul wird nach vorne verschoben.

Falls der zu verschiebende Modul nach hinten zu verschieben ist, folgt der Verfahrensschritt V3460. Der zu verschiebende Modul wird markiert als nach hinten zu verschieben.

Es folgt der Verfahrensschritt V3461. Der zu verschiebende Modul wird mit dem in der Reihenfolge der Link-Anordnung nachfolgenden Modul vertauscht, und es folgt der Verfahrensschritt V3480.

Falls der zu verschiebende Modul nach vorne zu verschieben ist, folgt der Verfahrensschritt V3470. Der zu verschiebende Modul wird markiert als nach vorne zu verschieben.

Es folgt der Verfahrensschritt V3471. Der zu verschiebende Modul wird mit dem in der Reihenfolge der Link-Anordnung vorhergehenden Modul vertauscht.

Es folgt der Verfahrensschritt V3480. Die beiden soeben vertauschten Module werden markiert als bereits verschoben.

Es folgt der Verfahrensschritt V3490. Es wird geprüft, ob einer der vertauschten Module an erster oder letzter Stelle ist, so daß in einem solchen Fall die Richtung des bevorzugten Verschiebens des Moduls geprüft und aktualisiert wird.

Es wird der Verfahrensschritt V3450 beendet.

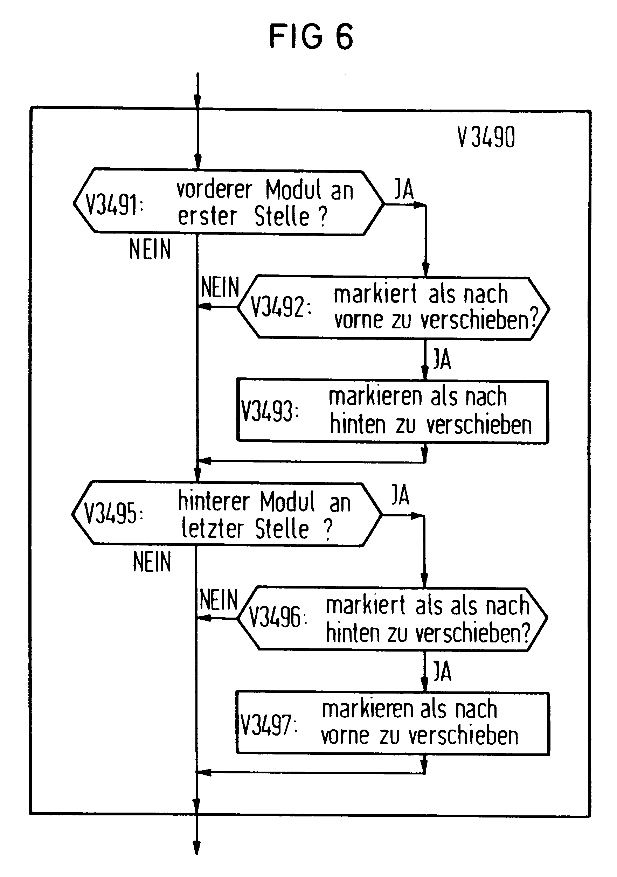

Die Fig. 6 zeigt ein Beispiel für den Verfahrensschritt V3490, bei welchem die beiden vertauschten Module geprüft werden.

Es wird der Verfahrensschritt V3491 ausgeführt. Es wird geprüft, ob der in der Reihenfolge der Link-Anordnung vordere von den beiden vertauschten Modulen jetzt an erster Stelle ist. Falls dies nicht der Fall ist, folgt der Verfahrensschritt V3495.

Anderenfalls, also falls der vordere vertauschte Modul jetzt an erster Stelle ist, folgt der Verfahrensschritt V3492. Es wird geprüft, ob dieser Modul markiert ist als nach vorne zu verschieben. Falls dies nicht der Fall ist, folgt der Verfahrensschritt V3495.

Anderenfalls, also falls der vordere vertauschte Modul jetzt an erster Stelle ist, und als nach vorne zu verschieben markiert ist, folgt der Verfahrensschritt V3493. Dieser Modul wird markiert als nach hinten zu verschieben.

Es folgt der Verfahrensschritt V3495. Es wird geprüft, ob der in der Reihenfolge der Link-Anordnung hintere von den beiden vertauschten Modulen jetzt an letzter Stelle ist. Falls dies nicht der Fall ist, wird der Verfahrensschritt V3490 beendet.

Anderenfalls, also falls der hintere vertauschte Modul jetzt an letzter Stelle ist, folgt der Verfahrensschritt V3496. Es wird geprüft, ob dieser Modul markiert ist als nach hinten zu verschieben. Falls dies nicht der Fall ist, wird der Verfahrensschritt V3490 beendet.

Anderenfalls, also falls der hintere vertauschte Modul jetzt an letzter Stelle ist, und als nach hinten zu verschieben markiert ist, folgt der Verfahrensschritt V3497. Dieser Modul wird markiert als nach vorne zu verschieben. Der Verfahrensschritt V3490 wird beendet.

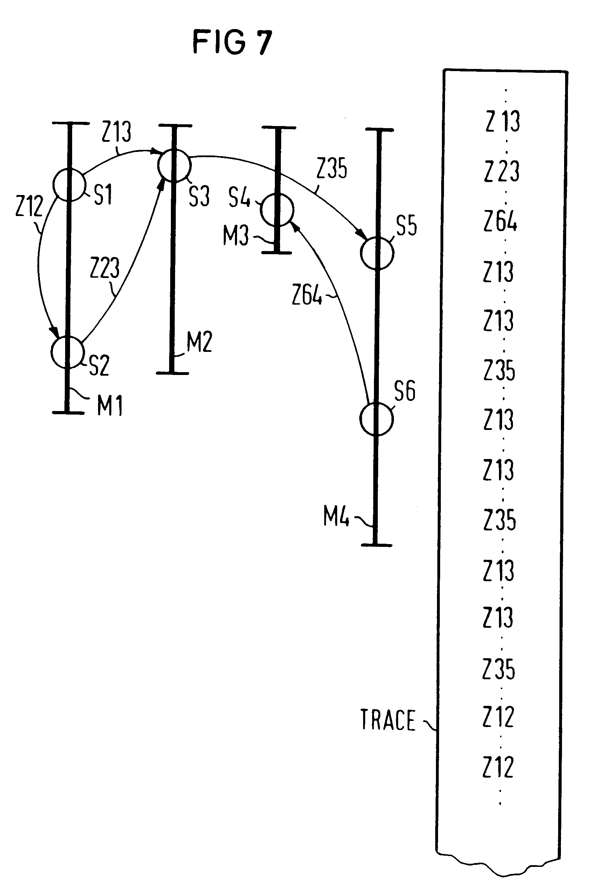

Die Fig. 7 zeigt ein Beispiel für Speicherzugriffe Z12, Z13, Z23, Z35, Z64 von Modulen M1, M2, M3, M4. Diese Module werden im Verfahrensschritt V1000 erstellt.

An einer Programmstelle S1 im Modul M1 erfolgt der Speicherzugriff Z12 auf eine Programmstelle S2 im selben Modul M1. Dies kann beispielsweise ein Datenzugriff sein zum Lesen oder Ändern von Dateninhalten. Ebenso kann bei diesem Speicherzugriff eine Instruktion geladen werden, beispielsweise bei einer Sprunginstruktion an der Programmstelle S1 zur Programmstelle S2.

An der Programmstelle S1 im Modul M1 erfolgt der Speicherzugriff Z13 auf eine weitere Programmstelle S3 im Modul M2. Die Programmstelle S1 kann demzufolge beispielsweise ein Registerindizierter Datenzugriff auf die Dateninhalte der Programmstelle S2 oder S3 sein. Es kann die Programmstelle S1 bei diesem Ausführungsbeispiel ebenso eine beispielsweise Registerindizierte Sprunginstruktion sein zur Programmstelle S2 oder S3.

An der Programmstelle 52 im Modul M1 erfolgt der Speicherzugriff Z23 auf die Programmstelle S3 im Modul M2, beispielsweise als Datenzugriff oder Sprunginstruktion.

An der Programmstelle S3 im Modul M2 erfolgt der Speicherzugriff Z35 auf eine Programmstelle S5 im Modul M4, beispielsweise als Datenzugriff oder Sprunginstruktion.

An der Programmstelle S6 im Modul M4 erfolgt der Speicherzugriff Z64 auf eine Programmstelle S4 im Modul M3, beispielsweise als Datenzugriff oder Sprunginstruktion.

Die Tabelle 1 zeigt die Länge der Module dieses Ausführungsbeispieles.

Tabelle 1

| Modul: | M1 | M2 | M3 | M4 |
|--------|-----|-----|-----|-----|
| Länge: | 522 | 350 | 270 | 579 |

Beim Verfahrensschritt V2000 wird bei einer Simulation des Ablaufs des Programmes anhand dieser Module M1, M2, M3, M4 ein Trace-Protokoll TRACE erhalten, in welchem Speicherzugriffe aufgelistet werden gemäß ihrer Reihenfolge beim Ablauf des Programmes. In diesem Trace-Frotokoll TRACE ist bei diesem Ausführungsbeispiel der Speicherzugriff Z12 zweimal enthalten, der Speicherzugriff Z13 siebenmal, der Speicherzugriff Z23 einmal, der Speicherzugriff Z35 dreimal, der Speicherzugriff Z64 einmal, neben weiteren Speicherzugriffen, welche bei der Erläuterung nicht näher betrachtet werden.

Die betrachteten Speicherzugriffe Z12, Z13, Z23, Z35, Z64 werden in einer Tabelle 2 aufgelistet. Ebenso ist angegeben, von welchem Modul zu welchem Modul der Speicherzugriff an den betroffenen Programmstellen erfolgt. Ebenso ist angegeben, wie oft jeder Speicherzugriff im Trace-Protokoll enthalten ist.

Tabelle 2

| Speicherzugriff | von | nach | Anzahl |
|---|---|---|---|
| Z12 | M1/S1 | M1/S2 | 2 |
| Z13 | M1/S1 | M2/S3 | 7 |
| Z23 | M1/S2 | M2/S3 | 1 |
| Z35 | M2/S3 | M4/S5 | 3 |
| Z64 | M4/S6 | M3/S4 | 1 |

In einer Tabelle 3 werden die Programmstellen der Speicherzugriffe aufgelistet. Zu jeder betrachteten Programmstelle der Module wird die Hauptspeicheradresse angegeben, indem jeweils von einer Beginnadresse des Moduls ausgegangen wird.

Tabelle 3

| Programmstelle | Hauptspeicheradresse |
|---|---|
| M1/S1 | ADR.S1 = ADR.M1 + 66 |
| M1/S2 | ADR.S2 = ADR.M1 + 335 |
| M2/S3 | ADR.S3 = ADR.M2 + 56 |
| M3/S4 | ADR.S4 = ADR.M3 + 154 |
| M4/S5 | ADR.S5 = ADR.M4 + 206 |
| M4/S6 | ADR.S6 = ADR.M4 + 407 |

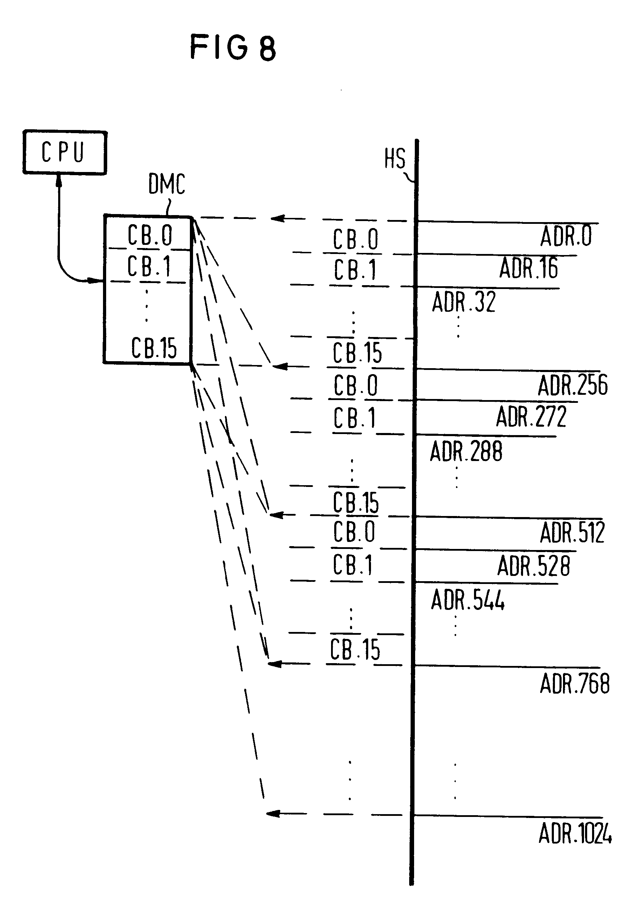

Die Fig. 8 zeigt ein Cache DMC, auf welches ein Hauptspeicher HS abgebildet wird. Bei diesem Ausführungsbeispiel wird ein direkt abbildendes Direct-Map-Cache DMC zugrundegelegt, in dessen 16 Cache-Blöcken CB.0, CB.1, ... CB.15 je 16 Worter des Hauptspeichers HS ladbar sind. Gemäß des direkten Abbildungsschemas werden die ersten 16 Worte, beginnend an einer betrachteten Adresse ADR.0 also die Speicherworte ADR.0 bis ADR.15, jeweils nur in den ersten Cache-Block CB.0 geladen. Die nächsten 16 Worte, beginnend an einer Adresse ADR.16, also die Speicherworte ADR.16 bis ADR.31, werden jeweils nur in den zweiten Cache-Block CB.1 geladen, usw.. Beginnend an einer Adresse ADR.256, sowie beginnend an einer Adresse ADR.512, usw., werden die jeweils nächsten 16 Worte ebenso jeweils nur in den Cache-Block CB.0 geladen. Beginnend an einer Adresse ADR.272, sowie beginnend an einer Adresse ADR.528, usw., werden die jeweils nächsten 16 Worte ebenso jeweils nur in den Cache-Block CB.1 geladen. Und so weiter.

Falls demzufolge ein Programm in den Hauptspeicher HS geladen ist, und von einem Prozessor CPU abgearbeitet werden soll, so werden zunächst blockweise Teile des Programmes aus dem langsameren Hauptspeicher HS in die Cache-Blöcke CB des schnelleren Direct-Map-Cache DMC geladen bei diesem Ausführungsbeispiel. Zwischen dem Prozessor CPU und den in den Cache-Blöcken geladenen Teilen des Programmes wird die Prozessbearbeitung beim Ablauf des Programmes ausgeführt. Mittels einer Write-Back-Funktion werden vom Prozessor CPU in den Cache-Blöcken CB ausgeführte Änderungen von Dateninhalten zur Aktualisierung der Dateninhalte im Hauptspeicher HS nachgezogen.

Beim Ablauf des Programmes können später benutzte Teile des Programmes bereits vorzeitig in den jeweiligen Cache-Block CB geladen werden. Dies kann insbesondere dann erfolgen, wenn der jeweils zum Laden des jeweiligen Teiles des Programmes beim Direct-Map-Cache DMC jeweils zu verwendende Teil des Cache-Blockes CB ein ausreichend langes Zeitintervall beim Ablauf des Programmes nicht verwendet wird, so daß in diesem Zeitintervall aus dem langsameren Hauptspeicher HS jene Programmteile rechtzeitig in den jeweiligen Cache-Block DB geladen werden können.

Beispielsweise können bei einem Ablauf des Programmes, welcher an der Adresse ADR.0 beginnt, sequentiell die Instruktionen, welche in den Cache-Block CB.0 geladen sind, bis zu einer beispielsweise betrachteten Hauptspeicheradresse ADR.11 abgearbeitet werden vom Prozessor CPU. Es ist beispielsweise an der Hauptspeicheradresse ADR.11 eine Sprunginstruktion zu einer Instruktion an der Hauptspeicheradresse ADR.274 zu bearbeiten. Somit können während des Zeitintervalls, währenddessen die Instruktionen zwischen den Hauptspeicheradressen ADR.0 und ADR.11 im Cache-Block CB.0 bearbeitet werden, Teile des Programmes von den Haupspeicheradressen ADR.272 bis ADR.287 aus dem Hauptspeicher HS rechtzeitig in den Cache-Block CB.1 geladen werden.

Falls hingegen bei diesem soeben betrachteten Fall an der Hauptspeicheradresse ADR.11 beispielsweise eine Sprunginstruktion zur Hauptspeicheradresse 258 vorhanden sein sollte, so wäre es beim Direct-Map-Cache DMC dieses Ausführungsbeispieles nicht möglich, rechtzeitig den danach benötigten Programmteil von den Hauptspeicheradressen ADR.256 bis ADR.271 in den hierfür vorgesehenen Cache-Block CB.0 zu laden, da dieser Cache-Block CB.0 durch den Prozessor CPU benutzt wird zur Prozessbearbeitung. Nach dem Bearbeiten der Sprunginstruktion gemäß Hauptspeicheradresse ADR.11, welche im Cache-Block CB.0 erfolgt, müßte der Prozessor CPU Wartezyklen einlegen, und abwarten, bis aus dem langsameren Hauptspeicher HS Jener Teil des Programmes, an den Hauptspeicheradressen beispielsweise von ADR.256 bis ADR.271 in den Cache-Block CB.0 geladen ist. Ein derartiger Speicherzugriff gemäß der Sprunginstruktion von der Hauptspeicheradresse ADR.11 zum Laden der Instruktion von der Hauptspeicheradresse ADR.258 würde in diesem Fall eine Verzögerung der Prozessbearbeitung, also einen Cache-Miss verursachen.

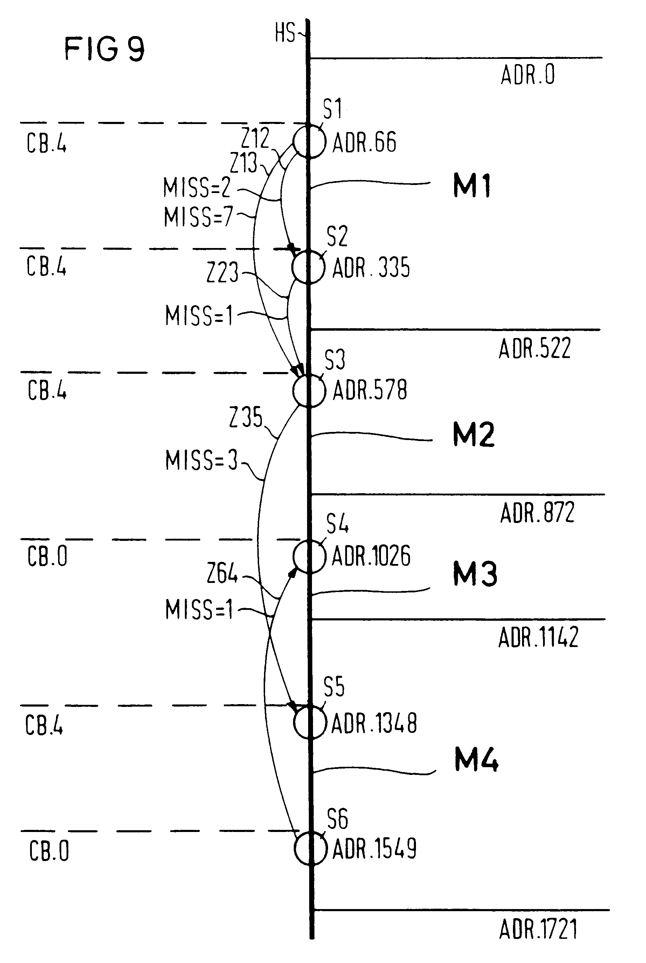

Die Fig. 9 zeigt, wie die Module M1, M2, M3, M4 gemäß einer anfangs vorliegenden Link-Anordnung, welche sich beispielsweise aus einer Reihenfolge beim Erstellen dieser Module ergibt, im Hauptspeicher HS angeordnet sind. Diese anfängliche Link-Anordnung wird im Verfahrensschritt V3000 des Untersuchungsverfahrens zunächst bezüglich zu erwartender Cache-Misses untersucht. Im Verfahrensschritt V3100 wird das Trace-Protokoll adaptiert. Die betrachteten Speicherzugriffe Z12, Z13, Z23, Z35, Z64, welche im Trace-Protokoll TRACE der Fig. 7 dargestellt sind, und welche in der Tabelle 2 aufgelistet sind, und deren Hauptspeicheradressen in der Tabelle 3 aufgelistet sind, werden bearbeitet. Die Länge der im Hauptspeicher HS gemäß Fig. 9 ohne Lücken angeordneten Module ist in der Tab. 1 angegeben. Beginnend an der betrachteten Hauptspeicheradresse ADR.0 ist der Modul M1 angeordnet, dessen Beginnadresse ADR.M1 gleich der Hauptspeicheradresse ADR.0 ist. Gemäß der Länge des Moduls M1 von 522 Worten, welche der Tabelle 1 entnehmbar ist, beginnt der Modul M2 bei dieser Link-Anordnung an der Hauptspeicheradresse ADR.522, welche gleich ist einer Beginnadresse ADR.M2 des Moduls M2. Gemäß der Länge des Moduls M2 von 350 Worten, welche ebenso der Tabelle 1 entnehmbar ist, beginnt der Modul M3 an der Hauptspeicheradresse ADR.872, welche somit gleich ist dessen Beginnadresse ADR.M3. Gemäß der Länge des Moduls M3 von 270 Worten beginnt der Modul M4 an der Hauptspeicheradresse ADR.1142, welche gleich ist dessen Beginnadresse ADR.M4. Bei dieser Link-Anordnung, bei welcher die Module M1, M2, M3, M4 somit lückenlos aneinandergefügt sind, belegen diese den Hauptspeicher bis vor die Hauptspeicheradresse ADR.1721.

Gemäß Tabelle 3 befindet sich demzufolge die Programmstelle S1 bei der in Fig. 9 dargestellten Link-Anordnung an der Hauptspeicheradresse ADR.66, und die Programmstelle S2 an der Hauptspeicheradresse ADR.335, die Programmstelle S3 an der Hauptspeicheradresse ADR.578, die Programmstelle S4 an der Hauptspeicheradresse ADR.1026, die Programmstelle S5 an der Hauptspeicheradresse ADR.1348, und die Programmstelle S6 an der Hauptspeicheradresse ADR.1549. Diese Programmstellen können vom Prozessor CPU nur dann bearbeitet werden, wenn sie in das Direct-Map-Cache DMC geladen sind. Beim Verfahrensschritt V3100 wird ermittelt, in welchen Cache-Block CB diese Programmstellen jeweils geladen werden sollen. Jede dieser Programmstellen kann gemäß des Abbildungsschemas des Direct-Map-Cache jeweils nur in einen der Cache-Blöcke CB des Direct-Map-Cache DMC geladen werden. Dies ist in Tabelle 4 dargestellt.

Tabelle 4

| Programmstelle | Hauptspeicheradresse | Cacheblock |
|---|---|---|
| M1/S1 | ADR.66 | CB.4 |
| M1/S2 | ADR.335 | CB.4 |
| M2/S3 | ADR.578 | CB.4 |
| M3/S4 | ADR.1026 | CB.0 |
| M4/S5 | ADR.1348 | CB.4 |
| M4/S6 | ADR.1549 | CB.0 |

Beim Verfahrensschritt V3200 sollen für die in Fig. 9 dargestellte Link-Anordnung die beim Ablauf des Programmes erwarteten Cache-Misses prognostiziert werden, insbesondere zu den im Trace-Protokoll TRACE in Fig. 7 auszugsweise dargestellten und betrachteten Speicherzugriffen, welche der Tabelle 2 entnehmbar sind. Aufgrund des Abbildungsschemas des Direct-Map-Cache DMC ist es nicht erforderlich aufgrund des Trace-Protokolls TRACE eine Reihenfolge der Speicherzugriffe zu berücksichtigen, um daraus eine Belegung der Cache-Blöcke zu simulieren, so daß daraus Cache-Misses prognostiziert werden können. Zumal da beim Direct-Map-Cache dieses Ausführungsbeispieles stets bekannt ist, in welchen der Cache-Blöcke die jeweilige Programmstelle jeweils zu laden ist, genügt es insbesondere anhand von Tabelle 2 für jeden der aufgelisteten Speicherzugriffe zu überprüfen, ob die beiden jeweils betroffenen Programmstellen insbesondere gemäß Tabelle 4 in den selben Cache-Block geladen werden müssen, was einen Cache-Miss bedeutet. Zur besseren Erläuterung ist dies in Tabelle 5 dargestellt.

Tabelle 5

| Speicher-zugriff | von | nach | Anzahl | Cache-Miss |
|---|---|---|---|---|
| 12 | M1/ADR.66/CB.4 | M1/ADR.335/CB.4 | 2 | JA |
| 13 | M1/ADR.66/CB.4 | M2/ADR.578/CB.4 | 7 | JA |
| Z23 | M1/ADR.335/CB.4 | M2/ADR.578/CB.4 | 1 | JA |
| 35 | M2/ADR.578/CB.4 | M4/ADR.1348/CB.4 | 3 | JA |
| Z64 | M4/ADR.1549/CB.0 | M3/ADR.1026/CB.0 | 1 | JA |

Daraus ergeben sich die in der Fig. 9 dargestellten und betrachteten Cache-Misses MISS, deren jeweils angegebene Anzahl mit der Tabelle 5 übereinstimmt.

Beim Verfahrensschritt V3310 wird geprüft, ob gemäß Tabelle 5 Cache-Misses vorliegen. Dies ist der Fall, insbesondere in einer Anzahl, welche so groß ist, daß ein Variieren der Link-Anordnung erfolgen soll.

Beim Verfahrensschritt V3311 wird eine Plottungstabelle erstellt. Anhand von Tabelle 5 wird untersucht, welche Module von den Speicherzugriffen mit Cache-Misses betroffen sind. Zu jeder Kombination von den Modulen wird aufsummiert angegeben, wie viele Cache-Misses vorliegen. Beispielsweise bei den Speicherzugriffen Z12 gibt es insgesamt zwei Cache-Misses, und es ist nur der Modul M1 betroffen, wie dies insbesondere der Tabelle 5 entnehmbar ist. Beispielsweise bei den Speicherzugriffen Z13 und Z23 gibt es insgesamt acht Cache-Misses, und es sind die beiden Module M1 und M2 betroffen. Bei den Speicherzugriffen Z35 gibt es insgesamt drei Cache-Misses, und es sind die beiden Module M2 und M4 betroffen. Beim Speicherzugriff Z64 gibt es einen Cache-Miss und es sind die beiden Module M3 und M4 betroffen. Dies ist in Tabelle 6 dargestellt, welche als Plottungstabelle zusammengestellt ist.

Tabelle 6

| betroffener Modul | M1 | M2 | M3 | M4 |
|---|---|---|---|---|
| M1 | MISS=2 (c) | MISS=8 (a) | --- | --- |
| M2 | | --- | --- | MISS=3 (b) |
| M3 | | | --- | MISS=1 (d) |
| M4 | | | | --- |

Beim Verfahrensschritt V3410 werden Plottungseinträge der Plottungstabelle untersucht, und bei diesem Ausführungsbeispiel gemäß ihrer Anzahl von Cache-Misses bearbeitet. Diese Reihenfolge ihrer Bearbeitung ist in der Tabelle 6 gemäß iterativ ausgeführter Bearbeitungsschritte symbolisch mittels (a), (b), (c), (d) wiedergegeben.

Ausgehend von der untersuchten Link-Anordnung gemäß M1, M2, M3, M4 wird gemäß (a) beim Verfahrensschritt V3412 erkannt, daß die beiden Module M1 und M2 betroffen sind, mit dem Modul M1 als in der Reihenfolge der Link-Anordnung vorderen Modul und mit dem Modul M2 als dem hinteren Modul. Beim Verfahrensschritt V3440 wird der hintere Modul M2 markiert als nach vorne zu verschieben. Dies soll insbesondere gemäß M2.v dargestellt sein. Dieser Modul M2.v wird bei den Verfahrensschritten V3451, V3452, V3453 überprüft und beim Verfahrensschritt V3470 erneut in gleicher Weise markiert als nach vorne zu verschieben. Beim Verfahrensschritt 3471 wird der Modul M2.v vertauscht mit seinem vorhergehenden Modul M1, so daß danach als Link-Anordnung M2.v, M1, M3, M4 vorliegt. Beim Verfahrensschritt V3480 werden die beiden vertauschten Module M2.v und M1 als bereits verschoben markiert. Dies soll durch ein Unterstreichen gemäß M2.v, M1 dargestellt sein, insbesondere auch in der Link-Anordnung M2.v, M1, M3, M4. Bei den Verfahrensschritten V3491 und V3492 wird der Modul M2.v überprüft, welcher beim Verfahrensschritt 3493 markiert wird als nach hinten zu verschieben. Dies soll gemäß M2.h dargestellt sein. Beim Verfahrensschritt V3495 wird der Modul M1 überprüft, so daß nach der Bearbeitung des Plottungseintrages gemäß (a) als Link-Anordnung M2.h, M1, M3, M4 vorliegt.

Ausgehend von dieser Link-Anordnung folgt die Bearbeitung des Plottungseintrages gemäß (b), bei welchem die Module M2.h und M4 als betroffene Module untersucht werden. Beim Verfahrensschritt V3411 wird erkannt, daß der Modul M2.h markiert ist als bereits verschoben. Es erfolgt zunächst keine weitere Änderung der Link-Anordnung.

Es folgt die Bearbeitung des Plottungseintrages gemäß (c), bei welchem der Modul M1 als betroffener Modul untersucht wird. Beim Verfahrensschritt V3411 wird erkannt, daß der Modul M1 markiert ist als bereits verschoben. Es erfolgt zunächst keine weitere Änderung der Link-Anordnung.

Es folgt die Bearbeitung des Plottungseintrages gemäß (d), bei welchem die Module M3 und M4 als betroffene Module untersucht werden. Beim Verfahrensschritt V3440 wird der Modul M4 markiert gemäß M4.v, beim Verfahrensschritt V3471 werden die Module M3 und M4.v vertauscht, und beim Verfahrensschritt V3480 markiert gemäß M4.v, M3, so daß danach als Link-Anordnung M2.h, M1, M4.v, M3 vorliegt, wie dies insbesondere anhand von Tabelle 7 erkennbar ist.

Tabelle 7

| Link-Anordnung | 1. Modul | 2. Modul | 3. Modul | 4.Modul |
|---|---|---|---|---|
| untersucht: | M1 | M2 | M3 | M4 |
| variiert (a): | M2.h | M1 | M3 | M4 |
| (b): | M2.h | M1 | M3 | M4 |
| (c): | M2.h | M1 | M3 | M4 |
| (d): | M2.h | M1 | M4.v | M3 |

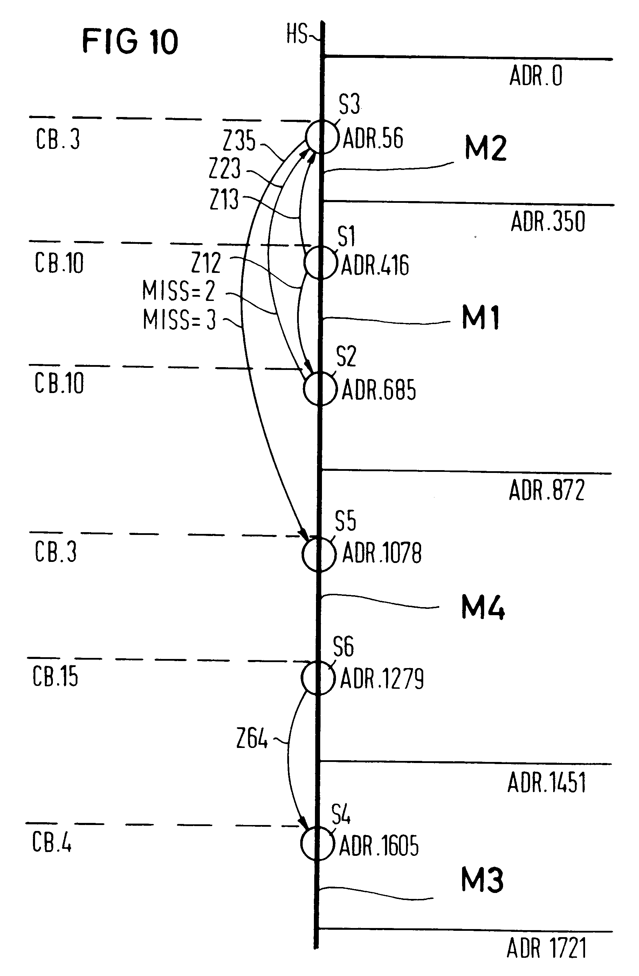

Die Fig. 10 zeigt diese Link-Anordnung, welche als eine noch nicht untersuchte Link-Anordnung erkannt wird beim Verfahrensschritt V3500.

Es folgt somit beim Verfahrensschritt V3100 das Ermitteln der Hauptspeicheradressen für die betrachteten Programmstellen gemäß der neuen Link-Anordnung in einer Weise, wie dies bereits für die vorher untersuchte Link-Anordnung anhand von Fig. 9 und Tabelle 4 erläutert ist, so daß für die neue Link-Anordnung Tabelle 8 und Fig 10 gilt.

Tabelle 8

| Programmstelle | Hauptspeicheradresse | Cacheblock |
|---|---|---|
| M1/S1 | ADR. 416 | CB.10 |
| M1/S2 | ADR. 685 | CB.10 |
| M2/S3 | ADR. 56 | CB.3 |
| M3/S4 | ADR. 1605 | CB.4 |
| M4/S5 | ADR. 1078 | CB.3 |
| M4/S6 | ADR. 1279 | CB.15 |

Beim Verfahrensschritt V3200 werden Cache-Misses prognostiziert gemäß der neuen Link-Anordnung in einer Weise, wie dies bereit für die vorher untersuchte Link-Anordnung anhand von Fig. 9 und Tabelle 5 erläutert ist, so daß für die neue Link-Anordnung Tabelle 9 und Fig. 10 gilt.

Tabelle 9

| Speicherzugriff | von | nach | Anzahl | Cache-Miss |
|---|---|---|---|---|
| Z12 | ADR.416/CB.10 | ADR.685/CB.10 | 2 | JA |
| Z13 | ADR.416/CB.10 | ADR.56/CB.3 | 7 | NEIN |
| Z23 | ADR.685/CB.10 | ADR.56/CB.3 | 1 | NEIN |
| Z35 | ADR.56/CB.3 | ADR.1078/CB.3 | 3 | JA |
| Z64 | ADR.1279/CB.15 | ADR.1605/CB.4 | 1 | NEIN |

Beim Verfahrensschritt V3310 wird erkannt, daß eine zu große Anzahl von Cache-Misses vorliegt, so daß beim Verfahrensschritt V3311 eine weitere Plottungstabelle erstellt wird in einer Weise, wie dies bereits anhand von Tabelle 6 erläutert ist, so daß nun Tabelle 10 gilt.

Tabelle 10

| betroffener Modul | M2.h | M1 | M4.v | M3 |
|---|---|---|---|---|
| M2.h | --- | --- | MISS=3 (e) | --- |
| M1 | MISS=2 (f) | --- | --- | --- |
| M4.v | | | --- | --- |
| M3 | | | | --- |

Beim Bearbeiten des Plottungseintrages gemäß (e) werden beim Verfahrensschritt V3411 die beiden betroffenen Module M2.h und M4.v untersucht. Beim Verfahrensschritt V3452 wird der Modul M4.v untersucht, welcher beim Verfahrensschritt V3471 mit dem Modul M1 vertauscht wird, so daß nach der Bearbeitung gemäß (e) als Link-Anordnung M2.h, M4.v, M1, M3 vorliegt.

Beim Bearbeiten des Plottungseintrages gemäß (f) wird beim Verfahrensschritt 3411 nur der Modul M1 untersucht, welcher als bereits verschoben markiert ist, so daß keine weitere Änderung der Link-Anordnung erfolgt, wie dies insbesondere anhand von Tabelle 11 Erkennbar ist.

Tabelle 11

| Link-Anordnung | 1. Modul | 2. Modul | 3. Modul | 4. Modul |
|---|---|---|---|---|
| untersucht: | M2.h | M1 | M4.v | M3 |
| variiert (e): | M2.h | M4.v | M1 | M3 |
| (f): | M2.h | M4.v | M1 | M3 |

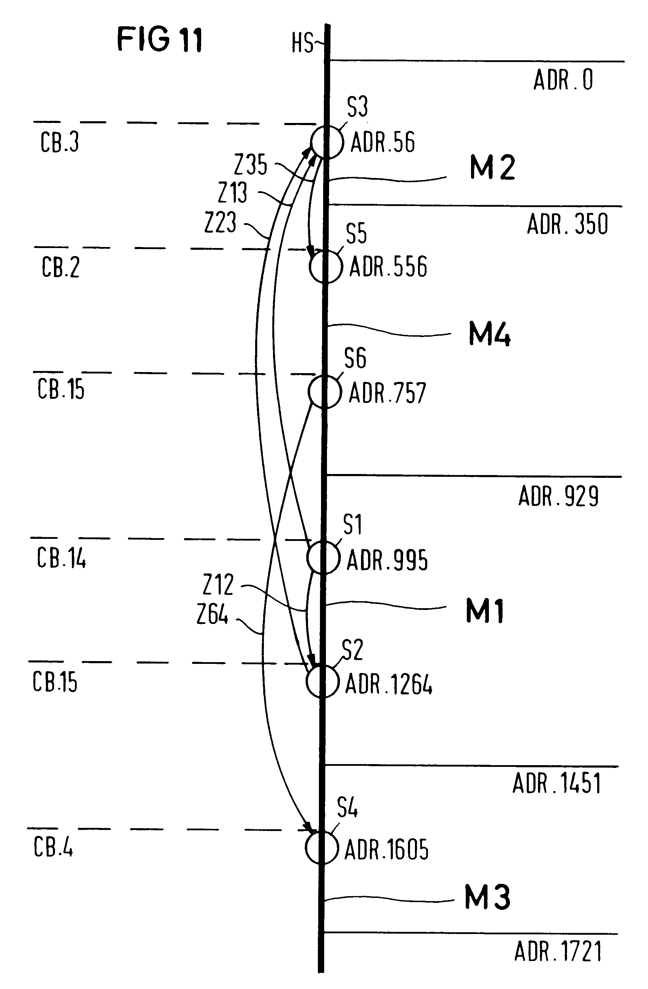

Die Fig. 11 zeigt diese Link-Anordnung, welche als eine noch nicht untersuchte Link-Anordnung erkannt wird beim Verfahrensschritt V3500.

Es folgt somit beim Verfahrensschritt V3100 das Ermitteln der Hauptspeicheradressen für die betrachteten Programmstellen gemäß dieser neuen Link-Anordnung in einer Weise, wie dies bereits anhand von Tabelle 4 erläutert ist, so daß für diese neue Link-Anordnung Tabelle 12 gilt.

Tabelle 12

| Programmstelle | Hauptspeicheradresse | Cacheblock |
|---|---|---|
| M1/S1 | ADR. 995 | CB.14 |
| M1/S2 | ADR. 1264 | CB.15 |
| M2/S3 | ADR. 56 | CB.3 |
| M3/S4 | ADR. 1605 | CB.4 |
| M4/S5 | ADR. 556 | CB.2 |
| M4/S6 | ADR. 757 | CB.15 |

Beim Verfahrensschritt V3200 werden Cache-Misses prognostiziert gemäß dieser neuen Link-Anordnung in einer Weise, wie dies bereits anhand von Tabelle 5 erläutert ist, so daß für diese neue Link-Anordnung Tabelle 13 und Figur 11 gilt.

Tabelle 13

| Speicher-zugriff | von | nach | Anzahl | Cache-Miss |
|---|---|---|---|---|
| Z12 | ADR.995/CB.14 | ADR.1264/CB.15 | 2 | NEIN |
| Z13 | ADR.995/CB.14 | ADR.56/CB.3 | 7 | NEIN |
| Z23 | ADR.1264/CB.15 | ADR.56/CB.3 | 1 | NEIN |
| Z35 | ADR.56/CB.3 | ADR.556/CB.2 | 3 | NEIN |
| Z64 | ADR.757/CB.15 | ADR.1353/CB.4 | 1 | NEIN |

Beim Verfahrensschritt V3310 wird erkannt, daß für diese neue Link-Anordnung keine Cache-Misses vorliegen, so daß beim Verfahrensschritt V4000 das Link-Verfahren mit dieser zuletzt vorliegenden Link-Anordnung durchgeführt wird.

**Patentansprüche**

1. Verfahren zum maschinellen Erstellen eines aus mehreren Modulen zu bindenden Programmes, bei dem ein Trace-Verfahren (V2000) durchgeführt wird zur Simulation des Ablaufs des Programmes, dessen Speicherzugriffe (Z12, Z13, ...) in einem Trace-Protokoll (TRACE) aufgelistet werden, gekennzeichnet durch folgende weitere Merkmale :
   a) es wird ein Untersuchungsverfahren (V3000) durchgeführt für zumindest eine zu untersuchende variierbare Link-Anordnung der Module (M1, M2, ...), in dem Cache-Misses (MISS) für ein beim Ablauf vorgesehenes Cache (DMC) prognostiziert werden anhand eines für die jeweils untersuchte Link-Anordnung adaptierten Trace-Protokolls (TRACE) der Simulation des Ablaufs, und es wird
   b) ein Linkverfahren (V4000) durchgeführt zum Binden des Programmes mit jener untersuchten Link-Anordnung, welche bezüglich einer geringen Anzahl von Cache-Misses (MISS) optimal ist.

2. Verfahren nach Anspruch 1, dadurch **gekennzeichnet,** daß eine Monte-Carlo-Methode benutzt wird zum Variieren der Link-Anordnung (V3300).

3. Verfahren nach Anspruch 1, dadurch **gekennzeichnet**, daß eine Plottungstabelle erstellt wird beim Untersuchen der Link-Anordnung (V3311).

4. Verfahren nach Anspruch 3, dadurch **gekennzeichnet**, daß in der Plottungstabelle (Tabelle 6, Tabelle 10) aufsummiert eingetragen wird, wieviele Cache-Misses (MISS) insgesamt bei Speicherzugriffen (Z12, Z13, ...) innerhalb je eines sowie zwischen je zweien der Module (M1, M2, ...) vorliegen, so daß anhand dieser Plottungseinträge der Plottungstabelle jene Module bestimmt werden, welche zum Variieren der Link-Anordnung verschoben werden (V3400).

5. Verfahren nach Anspruch 4, dadurch **gekennzeichnet,** daß beim Variieren der Link-Anordnung jeder Plottungseintrag von Cache-Misses (MISS) berücksichtigt wird, indem eine Reihenfolge der Module (M1, M2, ...) der Link-Anordnung so variiert wird (V3400),
   - daß im Falle von einem betroffenen Modul dieser bevorzugt nach hinten gereiht verschoben wird,
   - sowie daß im Falle von zwei betroffenen Modulen bevorzugt der in der Reihenfolge hintere nach vorne gereiht verschoben wird,
   - sowie daß eine Richtung der bevorzugten Reihung markiert wird,
   - sowie daß markiert wird, ob ein Modul bereits verschoben ist.

6. Verfahren nach einem der Ansprüche 1 bis 5, dadurch **gekennzeichnet**, daß beim Variieren der Link-Anordnung eine Lücke eingefügt wird.

**Claims**

1. Process for the machine production of a program to be linked from a plurality of modules, in which a trace process (V2000) is carried out to simulate the running of the program, the memory accesses (Z12, Z13, ...) of which are listed in a trace log (TRACE), characterized by the following further features:
   a) an investigation process (V3000) is carried out for at least one variable link arrangement of the modules (M1, M2, ...) to be investigated, in which process cache misses (MISS) for a cache (DMC) intended in the run are forecast using a trace log (TRACE) of the simulation of the run, adapted for the respectively investigated link arrangement, and
   b) a link process (V4000) is carried out for linking the program with that investigated link arrangement which is optimum with respect to a small number of cache misses (MISS).

2. Process according to Claim 1, characterized in that a Monte Carlo method is used for varying the link arrangement (V3300).

3. Process according to Claim 1, characterized in that a plotting table is produced when investigating the link arrangement (V3311).

4. Process according to Claim 3, characterized in that in the plotting table (Table 6, Table 10) it is entered in a totalled form how many cache misses (MISS) there are overall in the case of memory accesses (Z12, Z13, ...) within each one and between each two of the modules (M1, M2, ...), so that using these plotting entries of the plotting table those modules which are displaced for the varying of the link arrangement are determined (V3400).

5. Process according to Claim 4, characterized in that, when varying the link arrangement, each plotting entry of cache misses (MISS) is considered by varying a sequence of the modules (M1, M2, ...) of the link arrangement in such a way (V3400)
 - that in the case of one affected module said module is preferably displaced rearward in the sequence,
 - and that in the case of two affected modules preferably the rear one in the sequence is displaced forward in the sequence,
 - and that a direction of the preferred sequencing is marked,
 - and that it is marked whether a module has already been displaced.

6. Process according to one of Claims 1 to 5, characterized in that when varying the link arrangement a gap is inserted.


**Revendications**

1. Procédé pour l'établissement, par une machine, d'un programme devant être formé par la réunion de plusieurs modules, selon lequel on met en oeuvre un procédé de tracé (V2000) pour simuler le déroulement du programme, dont les accès en mémoire (Z12,Z13,...) sont listés dans un protocole de tracé (TRACE), remarquable par les caractéristiques supplémentaires suivantes :
   a) une procédure d'examen (V3000) est mise en oeuvre pour au moins un système de chaînage variable, devant être examiné, des modules (M1,M2,...), procédure selon laquelle des insuccès (MISS) pour une antémémoire (DMC) prévue dans le cadre de l'exécution sont pronostiqués sur la base d'un protocole de tracé (TRACE), adapté pour le système de chaînage respectivement examiné, de la simulation de l'exécution, et
   b) une procédure de chaînage (V4000) est mise en oeuvre pour relier le programme à chaque système de chaînage examiné, qui est optimum en rapport avec un faible nombre d'insuccès (MISS) dans l'antémémoire.

2. Procédé suivant la revendication 1, caractérisé par le fait qu'on utilise une méthode de Monte-Carlo pour modifier le système de chaînage (V3300).

3. Procédé suivant la revendication 1, caractérisé par le fait qu'on établit un tableau de tracé lors de l'examen du système de chaînage (V3311).

4. Procédé suivant la revendication 3, caractérisé par le fait que dans le tableau de tracé (tableau 6, tableau 10), on introduit, d'une manière sommée, le nombre d'insuccès (MISS) dans l'antémémoire présents globalement dans le cas d'accès en mémoire (Z12,Z13,...) à l'intérieur de chacun des modules (M1,M2, ...) et entre respectivement deux de ces modules, en sorte que sur la base de ces entrées de tracé du tableau de tracé, on détermine les modules qui sont décalés (V3400) pour modifier le système de chaînage.

5. Procédé suivant la revendication 4, caractérisé par le fait que lors de la modification du système de chaînage, on tient compte de chaque entrée d'insuccès (MISS) dans l'antémémoire dans le tracé par le fait qu'on modifie (V3400) une séquence des modules (M1,M2,...) du système de chaînage,
   - que dans le cas d'un module concerné, on rétrograde de préférence ce dernier, et
   - que dans le cas de deux modules concernés, on fait avancer de préférence le module qui est en arrière dans la séquence, et
   - qu'on marque une direction de la séquence préférée, et
   - qu'on marque si un module est déjà décalé.

6. Procédé suivant l'une des revendications 1 à 5, caractérisé par le fait que lors de la modification du système de chaînage, on insère un espace vide.

# FIG 1

```
V 1000:     Module  erstellen

V 2000:     Trace - Verfahren

V 3000:     Untersuchungsverfahren

V 4000:     Link - Verfahren
```

## FIG 2

V 3000

V3100: Trace-Protokoll adaptieren

V3200: Cache-Misses ermitteln

V3300: Variierungsverfahren

ENDE

NEUE
LINK-ANORDNUNG

# FIG 3

# FIG 4

V3400

V3410: Plottungseinträge unter - suchen (Ende?) → ENDE

↓ PLOTTUNGSEINTRAG

JA ← V3411: ein betroffener Modul bereits verschoben?

↓ NEIN

V3412: nur ein Modul betroffen? → ZWEI

EINER ↓

JA ← V3420: vorderer Modul markiert als nach vorne zu verschieben?

↓ NEIN

JA ← V3430: hinterer Modul markiert als nach hinten zu verschieben?

↓

V3440: hinteren Modul markieren als nach vorne zu verschieben

V3450: Modul verschieben

# FIG 5

V3450

V3451: Modul an letzter Stelle ?  → JA

NEIN

V3452: Modul markiert als nach vorne zu verschieben? → JA

NEIN

JA ← V3453 Modul an erster Stelle ? → NEIN

V3460: Modul markieren als nach hinten zu verschieben

V3470: Modul markieren als nach vorne zu verschieben

V3461: Modul vertauschen mit nachfolgendem Modul

V3471: Modul vertauschen mit vorhergehend. Modul

V3480: vertauschte Module markieren als bereits verschoben

V3490: die vertauschten Module überprüfen auf erste und letzte Stelle

# FIG 6

V 3490

V3491: vorderer Modul an erster Stelle ?  — JA

NEIN

V3492: markiert als nach vorne zu verschieben?  — NEIN

JA

V3493: markieren als nach hinten zu verschieben

V3495: hinterer Modul an letzter Stelle ?  — JA

NEIN

V3496: markiert als als nach hinten zu verschieben?  — NEIN

JA

V3497: markieren als nach vorne zu verschieben

# FIG 7

# FIG 8

FIG 9

FIG 10

FIG 11